# EUROPÄISCHE PATENTSCHRIFT

(11) **EP 3 297 862 B1**
(45) Veröffentlichungstag und Bekanntmachung des Hinweises auf die Patenterteilung: **22.09.2021**
(21) Anmeldenummer: 16724038.1
(22) Anmeldetag: 20.05.2016
(51) Int. Cl.: B60K 6/448, B60K 6/46, B60K 6/52, B60K 7/00, B60W 10/06, B60W 10/08, B60W 20/15, B60K 28/16, B60W 50/00

(54) **VERFAHREN ZUR STEUERUNG EINER RADDREHZAHL WENIGSTENS EINES RADES EINER ANTREIBBAREN ACHSE EINES ZWEISPURIGEN FAHRZEUGS MIT ZWEI ANTREIBBAREN ACHSEN UND ZWEISPURIGES FAHRZEUG MIT WENIGSTENS ZWEI ANTREIBBAREN ACHSEN**
METHOD FOR CONTROLLING A WHEEL ROTATIONAL SPEED OF AT LEAST ONE WHEEL OF A DRIVABLE AXLE OF A TWO-TRACK VEHICLE HAVING TWO DRIVABLE AXLES, AND TWO-TRACK VEHICLE HAVING AT LEAST TWO DRIVABLE AXLES
PROCÉDÉ DE COMMANDE DE LA VITESSE DE ROTATION D'AU MOINS UNE ROUE D'UN ESSIEU POUVANT ÊTRE ENTRAÎNÉ D'UN VÉHICULE À DEUX VOIES MUNI DE DEUX ESSIEUX POUVANT ÊTRE ENTRAÎNÉS, ET VÉHICULE À DEUX VOIES MUNI D'AU MOINS DEUX ESSIEUX POUVANT ÊTRE ENTRAÎNÉS

(30) Priorität: 20.05.2015 DE 102015209244
(43) Veröffentlichungstag der Anmeldung: 28.03.2018
(73) Patentinhaber: AVL Commercial Driveline & Tractor Engineering GmbH, 4400 Steyr (AT)
(72) Erfinder: KNEITZ, Udo, 4400 Steyr (AT); STEMPFER, Gerhard, 4451 Garsten (AT); WITTMANN, Bernhard, 3691 Noechling (AT)
(74) Vertreter: Hahner, Ralph
(86) Internationale Anmeldenummer: PCT/EP2016/061428
(87) Internationale Veröffentlichungsnummer: WO 2016/185019

(56) Entgegenhaltungen:
- DE-A1-102004 016 242
- DE-A1-102007 030 168
- US-A- 5 327 346
- US-A1- 2005 087 378
- US-A1- 2014 129 106

## Beschreibung

Die Erfindung betrifft ein Verfahren zur Steuerung oder Regelung einer Raddrehzahl wenigstens eines Rades einer antreibbaren Achse eines zweispurigen Fahrzeugs mit zwei antreibbaren Achsen, insbesondere ein Verfahren zur Steuerung oder Regelung einer Raddrehzahl wenigstens eines Rades einer antreibbaren Achse eines als Traktor oder als selbstfahrende Arbeitsmaschine ausgebildeten Fahrzeugs mit zwei antreibbaren Achsen. Die Erfindung betrifft ferner ein entsprechendes, zweispuriges Fahrzeug mit zwei antreibbaren Achsen.

Verfahren zur Steuerung oder Regelung einer Raddrehzahl wenigstens eines Rades einer antreibbaren Achse eines zweispurigen Fahrzeugs mit zwei antreibbaren Achsen sind aus dem Stand der Technik grundsätzlich bekannt, beispielsweise von Personenkraftwagen mit Allradantrieb.

Bei den meisten derartigen Verfahren wird die Raddrehzahl wenigstens eines Rades dabei traktionsoptimiert gesteuert, d.h. mit dem Ziel, dass mit dem jeweiligen Rad bzw. mit dem Fahrzeug eine größtmögliche Traktion erreicht wird, wobei dazu in der Regel die von einem Antriebsmotor abgegebene Leistung derart auf die einzelnen Räder verteilt wird, dass jedes der Räder mit optimalem Schlupf gegenüber dem Untergrund bzw. der Fahrbahn, angetrieben wird, wobei der optimale Schlupf eines Rades jeweils die Differenz zwischen der Radumfangsgeschwindigkeit des Rades und der aktuellen Fahrzeuggeschwindigkeit relativ zum jeweiligen Untergrund, bezogen auf die aktuelle Fahrzeuggeschwindigkeit ist, mit welcher die größte Haftung erreicht wird. Die Steuerung des Schlupfes erfolgt dabei in der Regel über die Steuerung des Raddrehmoments.

Bei Personenkraftwagen mit Allradantrieb, die in der Regel eine antreibbare Vorderachse und eine antreibbare Hinterachse aufweisen, ist dazu üblicherweise ein sogenanntes Verteilergetriebe vorgesehen, mit welchem die vom Antriebsmotor abgegebene Leistung situationsangepasst zwischen den Achsen, insbesondere zwischen den einzelnen Rädern der Achsen, aufgeteilt werden kann. Wird beispielsweise erkannt, dass eines oder beide Räder der Hinterachse durchdrehen, d.h. zu viel Schlupf aufweisen bzw. zu hohe Raddrehzahlen für die ermittelte Fahrzeuggeschwindigkeit, kann mittels des Verteilergetriebes die Antriebsleistung an der Hinterachse bzw. der einzelnen Räder der Hinterachse reduziert und an der Vorderachse erhöht werden, wodurch die Raddrehzahlen an der Hinterachse bzw. an den betreffenden, durchdrehenden Rädern, wieder reduziert werden können, so dass die Räder wieder mit optimalem Schlupf und damit wieder mit größtmöglicher Haftung gegenüber dem Untergrund angetrieben werden. Durch die Umverteilung der Antriebleistung zwischen der Hinterachse und der Vorderachse kann die Traktion des Fahrzeugs verbessert werden, ohne dass eine Gesamt-Antriebsleistung reduziert werden muss.

Bei als Hybridfahrzeug ausgebildeten Personenkraftwagen mit Allradantrieb, welche neben einem ersten Antriebsmotor, welcher in der Regel ein Verbrennungsmotor ist, wenigstens einen zweiten, anders ausgebildeten Antriebsmotor aufweisen, der in der Regel eine als Elektromotor betreibbare elektrische Maschine ist, ist in der Regel kein Verteilergetriebe vorgesehen, mit welchem die vom ersten Antriebsmotor abgegebene Leistung zwischen den Achsen, insbesondere zwischen der Hinterachse und der Vorderachse, verteilt werden kann, sondern der erste Antriebsmotor ist in der Regel mit einer der beiden Achsen gekoppelt, meistens mit der Hinterachse, während der zweite Antriebsmotor zum Antrieb der anderen Achse vorgesehen ist. Wird an wenigstens einem Rad der von dem ersten Antriebsmotor angetriebenen Achse, beispielsweise an der Hinterachse, ein zu hoher Schlupf bzw. das Durchdrehen des Rades festgestellt, kann zur Verbesserung der Traktion die Antriebsleistung des zugehörigen Antriebsmotors auf diese Achse reduziert und mittels des anderen Antriebsmotors, beispielsweise mittels des Elektromotors, eine entsprechende Antriebsleistung auf die andere Achse aufgebracht werden, um bei gleicher Gesamt-Antriebsleistung eine verbesserte Traktion zu erreichen.

Ein gattungsgemäßes Fahrzeug sowie ein gattungsgemäßes Verfahren zur Steuerung oder Regelung der Raddrehzahlen ist beispielsweise aus der EP 1 205 331 A2 und aus der WO 2008/095067 A1 bekannt. Mittlerweile sind außerdem eine Reihe allradgetriebener Arbeitsmaschinen bekannt, wie beispielsweise Landmaschinen oder Baumaschinen, insbesondere Traktoren und selbstfahrende Arbeitsmaschinen, die entsprechende Regelsysteme zur Steuerung der Raddrehzahlen aufweisen.

Die US 2005/087378 A1 betrifft ein landwirtschaftliches Fahrzeug, welches eine Vielzahl an Rädern mit wenigstens einem Antriebsrad aufweist, wobei das Antriebsrad über ein Getriebe, welches ein variables Übersetzungsverhältnis aufweist, mit einem Motor verbunden ist. Ferner weist das landwirtschaftliche Fahrzeug eine Vielzahl an Reifen sowie eine Vielzahl von Radschlupf-verringernden Mechanismen auf, wie etwa einen Mechanismus, um Gewicht über das Fahrzeug zu bewegen, einen Mechanismus zum Einstellen der Antriebsübersetzungsverhältnisse, einen Mechanismus zum Einstellen des Reifendrucks und einen Mechanismus zum Ändern der Motordrehzahl. Das Fahrzeug umfasst ferner einen zentralen Mikrocomputer, mit dem die Mechanismen elektrisch verbunden sind, und eine Steuerung zur Radschlupfeinstellung und eine Steuerung zum Einstellen einer minimalen Fahrzeugfahrgeschwindigkeit, wobei die Steuerungen über den Mikrocomputer mit den Mechanismen verbunden sind. Aus der DE 10 2004 016 242 A1 ist ein Antriebssystem eines Arbeitsfahrzeugs mit einem Hauptmotor, der mit einer Hydraulikpumpe in Antriebsverbindung steht, die mit einem ersten Hydraulikmotor und mit einem zweiten Hydraulikmotor verbunden ist bekannt. Eine Steuerungseinrichtung verstellt bei einer erkannten, unerwünschten Betriebsbedingung an mindestens einem der Räder des Arbeitsfahrzeugs einen zugehörigen Aktor in Richtung verminderten Verdrängungsvolumens des Hydraulikmotors. Außerdem wird der Aktor des jeweils anderen Hydraulikmotors und/oder der Aktor der Hydraulikpumpe zum Konstanthalten der Fahrgeschwindigkeit verstellt.

Der Umverteilung der Antriebsleistung zwischen den einzelnen Achsen sind dabei Grenzen gesetzt, insbesondere physikalische. Beispielsweise ist eine Umverteilung der Antriebsleistung, zum Beispiel von der Hinterachse auf die Vorderachse, nur ohne Reduzierung der Gesamt-Antriebsleitung möglich, wenn sich die Räder der Vorderachse noch nicht an der Haftungsgrenze befinden, d.h. nur, wenn die Räder an der Vorderachse noch nicht durchdrehen und noch die gewünschte Antriebsleistung auf den Untergrund übertragen können.

Darüber hinaus sollte für ein optimales Fahrverhalten, insbesondere für eine gute Traktion und für einen möglichst energieeffizienten Betrieb des Fahrzeugs, die Radumfangsgeschwindigkeit der Räder der Achse, an welcher die Antriebsleistung erhöht werden soll, an die Radumfangsgeschwindigkeit der Räder der anderen Achse angepasst sein, d.h. die Radumfangsgeschwindigkeiten der Räder der Achse, an welcher die Antriebsleistung in Abhängigkeit von der Radumfangsgeschwindigkeit der Räder der anderen Achse eingestellt werden soll, sollte relativ zur Radumfangsgeschwindigkeit der Räder der anderen Achse eingestellt werden, insbesondere nur in gewissen Grenzen von dieser abweichen. Denn eine zu große Differenz der Radumfangsgeschwindigkeiten der Räder der angetriebenen Achsen kann zu einem erhöhten Reifenverschleiß sowie zu erhöhten Antriebsverlusten führen. Eine Aufgabe der vorliegenden Erfindung ist es, ein alternatives Verfahren, insbesondere ein verbessertes Verfahren, zur Steuerung oder Regelung einer Raddrehzahl wenigstens eines Rades einer antreibbaren Achse eines zweispurigen Fahrzeugs mit zwei antreibbaren Achsen bereitzustellen, mit dem insbesondere in wenigstens einigen Fahrsituationen die Traktion des Fahrzeugs verbessert werden kann und mit dem vorzugsweise ein energieeffizienterer Betrieb des Fahrzeugs möglich ist.

Diese Aufgabe wird mittels eines Verfahrens gemäß der Lehre des Anspruchs 1 gelöst, sowie mit einem zweispurigen Fahrzeug gemäß der Lehre des Anspruchs 13. Bevorzugte Ausgestaltungen des erfindungsgemäßen Verfahrens und des erfindungsgemäßen Fahrzeugs sind Gegenstand der abhängigen Ansprüche. Der Wortlaut der Ansprüche wird durch ausdrückliche Bezugnahme zum Inhalt der Beschreibung gemacht.

Das erfindungsgemäße Verfahren betrifft eine Steuerung oder Regelung einer Raddrehzahl wenigstens eines Rades einer antreibbaren Achse eines zweispurigen Fahrzeugs mit zwei antreibbaren Achsen, insbesondere eine Steuerung einer Raddrehzahl wenigstens eines Rades einer antreibbaren Achse eines als Traktor oder als selbstfahrende Arbeitsmaschine ausgebildeten Fahrzeugs mit zwei antreibbaren Achsen, wobei das Fahrzeug eine erste antreibbare Achse mit wenigstens zwei Rädern, eine zweite, antreibbare Achse mit wenigstens zwei Rädern, einen ersten Antriebsmotor, wenigstens einen zweiten Antriebsmotor, eine Einrichtung zur Erfassung von Fahrzustandsgrößen zur Ermittlung eines Fahrzustandes des Fahrzeugs und eine Steuerungseinrichtung aufweist.

Dabei ist der erste Antriebsmotor zum Antrieb wenigstens eines Rades der ersten Achse vorgesehen, und der zweite Antriebsmotor ist zum Antrieb wenigstens eines Rades der zweiten Achse vorgesehen. Die Einrichtung zur Erfassung von Fahrzustandsgrößen ist wenigstens dazu ausgebildet, eine Ist-Drehzahl der ersten Achse zu erfassen, und die Steuerungseinrichtung ist dazu ausgebildet, wenigstens in Abhängigkeit von der ermittelten Ist-Drehzahl der ersten Achse eine Soll-Drehzahl für das wenigstens eine Rad der zweiten Achse zu ermitteln und wenigstens den zweiten Antriebsmotor derart anzusteuern, dass sich an dem wenigstens einen Rad der zweiten Achse die gewünschte Soll-Drehzahl einstellt.

Das Verfahren umfasst dabei die folgenden Schritte: Ermitteln einer Ist-Drehzahl der ersten Achse, Ermitteln der Soll-Drehzahl für das wenigstens eine Rad der zweiten Achse wenigstens in Abhängigkeit von der Ist-Drehzahl der ersten Achse und Ansteuern wenigstens des zweiten Antriebsmotors derart, dass sich die ermittelte Soll-Drehzahl an dem wenigstens einen Rad der zweiten Achse einstellt.

Im Sinne der Erfindung ist die Ist-Drehzahl der ersten Achse dabei die aktuelle, erfasste Raddrehzahl der ersten Achse, wobei die Ist-Drehzahl dabei sowohl die aktuelle Raddrehzahl eines Rades der ersten Achse sein kann, als auch eine aus den Raddrehzahlen einiger Räder oder aus den Raddrehzahlen sämtlicher Räder der ersten Achse ermittelte Raddrehzahl.

Im Sinne der Erfindung ist die Soll-Drehzahl, die für wenigstens ein Rad der zweiten Achse ermittelt wird, dabei die Raddrehzahl die an wenigstens einem Rad der zweiten Achse eingestellt werden soll.

Bei den erfindungsgemäßen Verfahren werden zur Ermittlung der Soll-Drehzahl zunächst eine Synchron-Soll-Drehzahl in Abhängigkeit von der Ist-Drehzahl der ersten Achse ermittelt und anschließend in Abhängigkeit von der ermittelten Synchron-Soll-Drehzahl die Soll-Drehzahl ermittelt. Die Synchron-Soll-Drehzahl ist dabei die Soll-Drehzahl, bei der sich an wenigstens einem Rad der zweiten Achse die gleiche Radumfangsgeschwindigkeit einstellt wie an den Rädern der ersten Achse.

D.h. mit anderen Worten, dass die Soll-Drehzahl für wenigstens ein Rad der zweiten Achse erfindungsgemäß nicht unmittelbar aus der Ist-Drehzahl der ersten Achse ermittelt wird, sondern dass die Ist-Drehzahl zunächst auf die Raddrehzahl korrigiert wird, bei der sich an wenigstens einem Rad der zweiten Achse die gleiche Radumfangsgeschwindigkeit einstellt wie an den Rädern der ersten Achse, wobei diese Raddrehzahl als Synchron-Soll-Drehzahl bezeichnet wird, und dass erst anschließend, in Abhängigkeit von der korrigierten Ist-Drehzahl, d.h. in Abhängigkeit von der Synchron-Soll-Drehzahl, die Soll-Drehzahl ermittelt wird.

Unter der Radumfangsgeschwindigkeit im Sinne der Erfindung wird dabei die Geschwindigkeit am äußeren Radumfang verstanden, d.h. die Geschwindigkeit der Lauffläche des Reifens. Kann das Rad bzw. der Reifen des Rades auf dem Untergrund frei abrollen, entspricht die Radumfangsgeschwindigkeit nahezu der Fahrzeuggeschwindigkeit und der Schlupf, d.h. die Differenz der Radumfangsgeschwindigkeit zur aktuellen Fahrzeuggeschwindigkeit relativ zum Untergrund, bezogen auf die aktuelle Fahrzeuggeschwindigkeit, ist nahezu Null. Dreht das Rad hingegen durch ist die Radumfangsgeschwindigkeit deutlich größer als die aktuelle Fahrzeuggeschwindigkeit relativ zum Untergrund, der Schlupf ist groß, wobei der Schlupf in diesem Fall positiv ist. Blockiert das Rad hingegen und rutscht das Fahrzeug mit stehendem, da blockiertem Rad über den Untergrund, ist die Radumfangsgeschwindigkeit deutlich kleiner als die aktuelle Fahrzeuggeschwindigkeit relativ zum Untergrund, der Schlupf ist ebenfalls groß, jedoch negativ.

Durch die Verwendung der Synchron-Soll-Drehzahl als Basis für die Ermittlung der Soll-Drehzahl anstelle der Ist-Drehzahl der ersten Achse, kann zum einen der negative Effekt, dass unterschiedliche Reifendimensionen, unterschiedliche Verschleißzustände und/oder unterschiedliche Reifenfülldrücke der Räder der beiden Achsen zu unterschiedlichen Radaußendurchmessern führen und infolgedessen sich unterschiedliche Radumfangsgeschwindigkeiten einstellen und zum anderen der negative Effekt, dass sich aufgrund von unterschiedlichen Toleranzen in den Antriebssträngen der Achsen bei gleicher, eingestellter Raddrehzahl an beiden Achsen unterschiedliche Radumfangsgeschwindigkeiten einstellen, reduziert bzw. in einigen Fällen sogar vollständig ausgeglichen und damit korrigiert werden.

Dadurch kann zum einen eine größere Flexibilität bei der Wahl der Reifendimensionen für die einzelnen, antreibbaren Achsen erreicht werden.

Ferner kann in vielen Fahrsituationen eine verbesserte Traktion erreicht werden, da die Radumfangsgeschwindigkeit wenigstens eines Rades der zweiten Achse relativ zur Radumfangsgeschwindigkeit der Räder der ersten Achse genauer eingestellt werden kann, d.h. die Radumfangsgeschwindigkeit wenigstens eines Rades der zweiten Achse kann besser an die Radumfangsgeschwindigkeit der Räder der ersten Achse angepasst werden.

Insbesondere ermöglicht das erfindungsgemäße Verfahren die Einstellung der gleichen Radumfangsgeschwindigkeit an wenigstens einem Rad der zweiten Achse wie an den Rädern der ersten Achse, d.h. die Einstellung eines Gleichlaufs, wobei sich ein Gleichlauf der zweiten Achse mit der ersten Achse einstellt, wenn die Soll-Drehzahl gleich der Synchron-Soll-Drehzahl ist, wodurch in vielen Fahrsituationen sogar eine optimale Traktion erreicht werden kann.

Der Gleichlauf ermöglicht dabei einen besonders energieeffizienten Betrieb des Fahrzeugs. Insbesondere können Antriebsverluste reduziert werden und ein infolge unterschiedlicher Radumfangsgeschwindigkeiten der Räder der ersten Achse zu den Rädern der zweiten Achse auftretender, erhöhter Reifenverschleiß kann vermieden werden.

Durch die verbesserte Traktion des Fahrzeugs können höhere Zugleistungen erreicht werden und das Fahrzeug kann energieeffizienter betrieben werden, denn eine verbesserte Traktion und somit weniger Schlupf gehen unmittelbar mit einem geringeren Kraftstoffverbrauch einher.

Da mit Hilfe eines erfindungsgemäßen Verfahrens zusätzliche Lastgewichte zur Verbesserung der Traktion nicht mehr unbedingt erforderlich sind, hat ein erfindungsgemäßes Verfahren außerdem den Vorteil, dass im Ergebnis auch eine unerwünschte Bodenverdichtung, die unmittelbar vom Fahrzeuggewicht abhängt und mit zunehmendem Fahrzeuggewicht zunimmt, wie sie beispielsweise beim Überfahren eines Ackers mit einem Traktor auftritt, reduziert werden kann.

Der aufgrund eines erfindungsgemäßen Verfahrens mögliche Entfall der zusätzlichen Lastgewichte hat außerdem den Vorteil, dass der sogenannte Bulldozing-Effekt reduziert werden kann, da das Fahrzeug bzw. dessen Räder bzw. Reifen sich aufgrund des geringeren Gewichts des Fahrzeugs nicht mehr so tief in den Boden eingraben. Infolgedessen ist der Erdkeil, gegen den die Reifen rollen, kleiner als bei einem vergleichbaren Fahrzeug, welches Lastgewichte zur Verbesserung der Traktion benötigt, wodurch sich im Ergebnis ein geringerer Rollwiderstand und damit ein geringerer Fahrwiderstand einstellt, was zu einer weiteren Reduzierung des Kraftstoffverbrauchs führt.

Im Sinne der Erfindung wird unter einem Verfahren zum Steuern einer Raddrehzahl wenigstens eines Rades einer antreibbaren Achse eines zweispurigen Fahrzeugs mit zwei antreibbaren Achsen ein Verfahren verstanden, was dazu ausgebildet ist, die Raddrehzahl wenigstens eines Rades einer antreibbaren Achse eines zweispurigen Fahrzeugs mit zwei antreibbaren Achsen gerichtet zu beeinflussen. Eine Rückkopplung der Raddrehzahl ist dabei nicht zwingend erforderlich, selbstverständlich jedoch möglich, so dass ein erfindungsgemäßes Verfahren auch ein Verfahren zur Regelung einer Raddrehzahl wenigstens eines Rades einer antreibbaren Achse eines zweispurigen Fahrzeugs mit zwei antreibbaren Achsen einschließt, welches die Merkmale eines erfindungsgemäßen Verfahrens aufweist.

Im Sinne der Erfindung wird unter der Raddrehzahl dabei die Anzahl der Umdrehungen eines Rades innerhalb einer definierten Zeitdauer verstanden, beispielsweise die Anzahl der Umdrehungen eines Rades pro Minute.

Unter einer antreibbaren Achse wird im Sinne der Erfindung eine Achse verstanden, welche mittels eines Antriebsmotors antreibbar ist, d.h. eine Achse, bei der auf wenigstens ein Rad die Antriebsleistung wenigstens eines Antriebsmotors übertragen werden kann.

Unter einem zweispurigen Fahrzeug im Sinne der Erfindung wird ein Fahrzeug verstanden, dessen Räder wenigstens in zwei Spuren abrollen.

Im Sinne der Erfindung wird unter einem Traktor eine Zugmaschine verstanden, die in der Landwirtschaft zum Zug, aber auch zum Antrieb landwirtschaftlicher Maschinen und/oder Arbeitsgeräte benutzt wird.

Unter einer selbstfahrenden Arbeitsmaschine im Sinne der Erfindung wird ein zweispuriges Kraftfahrzeug verstanden, das nach seiner Bauart und mit seinen besonderen, mit dem Fahrzeug fest verbundenen Einrichtungen zur Verrichtung von Arbeiten, jedoch nicht zur Beförderung von Personen oder Gütern, bestimmt und geeignet ist (§2 Nr. 17 FZV). Selbstfahrende Arbeitsmaschinen sind beispielsweise Erntemaschinen, Mähdrescher, Baumaschinen und diverse Sondermaschinen wie Autokräne und der dergleichen.

Die erste Achse ist vorzugsweise eine Hinterachse und die zweite Achse eine Vorderachse. Selbstverständlich kann die erste Achse aber auch die Vorderachse sein und die zweite Achse die Hinterachse.

Unter einer Fahrzustandsgröße im Sinne der Erfindung wird jede Größe verstanden, welche dazu geeignet ist, einen Fahrzustand des Fahrzeugs zumindest teilweise zu beschreiben. Typische Fahrzustandsgrößen sind die fahrdynamischen Zustandsgrößen gemäß DIN 70000, beispielsweise Fahrzeuggeschwindigkeit, Fahrzeuglängsbeschleunigung, Fahrzeugquerbeschleunigung, Gierwinkel, Nickwinkel, Wankwinkel, Gierrate, Nickrate, Wankrate und dergleichen sowie Größen wie die Raddrehzahlen der einzelnen Räder, Schlupf der einzelnen Räder gegenüber dem Untergrund, Lenkwinkel, Lenkwinkelgeschwindigkeit, Radlenkwinkel, Gaspedalstellung oder der Bremsdruck.

In einer vorteilhaften Ausgestaltung des erfindungsgemäßen Verfahrens wird die Synchron-Soll-Drehzahl ermittelt, indem die Ist-Drehzahl der ersten Achse mit einem vordefinierten Synchron-Korrekturfaktor beaufschlagt wird, wobei die Synchron-Soll-Drehzahl vorzugsweise berechnet wird, indem die Ist-Drehzahl der ersten Achse mit dem Synchron-Korrekturfaktor multipliziert wird. Vorzugsweise ist der Synchron-Korrekturfaktor dazu in der Steuerungseinrichtung als Parameter hinterlegt.

Die Verwendung eines Synchron-Korrekturfaktors, insbesondere die Verwendung eines vordefinierten, als Parameter in der Steuerungseinrichtung hinterlegten Synchron-Korrekturfaktors, ermöglicht eine einfache Ermittlung der Synchron-Soll-Drehzahl in Abhängigkeit von der Ist-Drehzahl der ersten Achse.

Der in der Steuerungseinrichtung zu hinterlegende Wert des Synchron-Korrekturfaktors wird dabei vorzugsweise ermittelt, indem in regelmäßigen Abständen während einer Fahrt auf festem Untergrund eine aktuelle Ist-Drehzahl der ersten Achse und eine aktuelle Ist-Drehzahl der zweiten Achse erfasst werden, vorzugsweise gleichzeitig, und anschließend der Quotient aus der erfassten Ist-Drehzahl der zweiten Achse und der erfassten Ist-Drehzahl der ersten Achse berechnet wird, wobei das Ergebnis dieses Quotienten der Wert des Synchron-Korrekturfaktors ist, der als Parameter in der Steuerungseinrichtung hinterlegt werden kann.

Somit kann durch eine einfache, ohne wenig Aufwand durchführbare Fahrt auf festem Untergrund der Wert des Synchron-Korrekturfaktors ermittelt werden. Basierend auf der Annahme, dass bei einer Fahrt auf festem Untergrund die Räder der ersten Achse mit nahezu der gleichen Radumfangsgeschwindigkeit abrollen wie die Räder der zweiten Achse, führen unterschiedliche Reifendimensionen, unterschiedliche Verschleißzustände und/oder unterschiedliche Reifenfülldrücke der Räder der beiden Achsen zu unterschiedlichen Ist-Drehzahlen der beiden Achsen, d.h. zu einer von der Ist-Drehzahl der ersten Achse abweichenden Ist-Drehzahl der zweiten Achse und damit zu einem von eins abweichenden Wert des Synchron-Korrekturfaktors.

Unter festem Untergrund im Sinne der Erfindung wird ein Untergrund verstanden, welcher zu einem Haftreibungskoeffizienten von µ >0,8 zwischen Reifen und Untergrund führt, beispielsweise eine trockene, asphaltierte oder betonierte Straße.

Für die Ist-Drehzahl der zweiten Achse gilt dabei entsprechendes wie für die Ist-Drehzahl der ersten Achse, d.h. im Sinne der Erfindung ist die Ist-Drehzahl der zweiten Achse dabei die aktuelle, erfasste Raddrehzahl der zweiten Achse, wobei die Ist-Drehzahl der zweiten Achse dabei sowohl die aktuelle Raddrehzahl eines Rades der zweiten Achse sein kann, als auch eine aus den Raddrehzahlen einiger Räder oder aus den Raddrehzahlen sämtlicher Räder der zweiten Achse ermittelte Raddrehzahl.

In einer vorteilhaften Ausgestaltung des erfindungsgemäßen Verfahrens erfolgt die Neuberechnung des Synchron-Korrekturfaktors dabei in regelmäßigen, vordefinierten Abständen automatisch, wenn anhand der ermittelten Fahrzustandsgrößen ein fester Untergrund erkannt wird, oder aufgrund eines manuell eingegebenen Fahrerwunsches, beispielsweise nach einem Räderwechsel oder nach einer Veränderung des Reifenfülldruckes.

Wird der Wert des Synchron-Korrekturfaktors in regelmäßigen Abständen neu ermittelt, können mit dem erfindungsgemäßen Verfahren mittels des Synchron-Korrekturfaktors sich über die Laufzeit einstellende unterschiedliche Verschleißzustände und/oder unterschiedliche Reifenfülldrücke der Räder nicht nur ausgeglichen werden, sondern auch anhand des Synchron-Korrekturfaktors erkannt werden.

In einer weiteren vorteilhaften Ausgestaltung des erfindungsgemäßen Verfahrens wird daher bei Erreichen eines vordefinierten Synchron-Korrekturfaktor-Grenzwertes, d.h. wenn der Wert des Synchron-Korrekturfaktor den vordefinierten Synchron-Korrekturfaktor-Grenzwert erreicht, eine Warnmeldung ausgegeben.

In einer besonders bevorzugten Ausgestaltung eines erfindungsgemäßen Verfahrens, erfolgt eine Neuberechnung des Synchron-Korrekturfaktors jeweils nur, wenn der Schlupf an den Rädern, deren Raddrehzahlen in die Ist-Drehzahl der ersten Achse und in die Ist-Drehzahl der zweiten Achse eingehen, unterhalb einer vordefinierten Grenze liegt, insbesondere nur, wenn der Schlupf jeweils an sämtlichen Rädern der ersten Achse und der zweiten Achse nahezu Null ist. Dadurch kann der Synchron-Korrekturfaktor besonders genau ermittelt werden.

In einer Weiterbildung eines erfindungsgemäßen Verfahrens wird die Soll-Drehzahl zusätzlich in Abhängigkeit von einem Differenz-Drehzahl-Anteil ermittelt, welcher die Differenz der sich einzustellenden Radumfangsgeschwindigkeit wenigstens eines Rades der zweiten Achse zur Radumfangsgeschwindigkeit der Räder der ersten Achse definiert, wobei der Differenz-Drehzahl-Anteil vorzugsweise bestimmt wird, indem die ermittelte Synchron-Soll-Drehzahl mit einem vordefinierten Differenz-Korrekturfaktor beaufschlagt wird.

Durch Beaufschlagen der Synchron-Soll-Drehzahl mit einem vordefinierten Differenz-Korrekturfaktor, der vorzugsweise in Prozent angegeben wird, kann die Soll-Drehzahl der zweiten Achse gezielt relativ zur Ist-Drehzahl der ersten Achse eingestellt werden. Insbesondere kann auf diese Art und Weise besonders einfach gezielt ein Vorlauf, d.h. eine höhere Radumfangsgeschwindigkeit wenigstens eines Rades der zweiten Achse gegenüber den Rädern der ersten Achse, ein Gleichlauf, d.h. die gleiche Radumfangsgeschwindigkeit, oder ein Nachlauf, d.h. eine geringere Radumfangsgeschwindigkeit, eingestellt werden, wobei sich vorzugsweise die gleiche Radumfangsgeschwindigkeit an wenigstens einem Rad der zweiten Achse einstellt, wenn der Differenz-Korrekturfaktor Null ist.

Durch die Möglichkeit, gezielt einen Vorlauf, einen Gleichlauf oder einen Nachlauf wenigstens eines Rades der zweiten Achse gegenüber den Rädern der ersten Achse einzustellen, je nach Fahrsituation, kann die Radumfangsgeschwindigkeit wenigstens eines Rades der zweiten Achse immer an die jeweilige Fahrsituation angepasst werden, beispielsweise an den Untergrund, eine Hangneigung oder an bestimmte Fahrmanöver wie Anfahren am Berg bergab oder bergauf. Ferner kann das gezielte Einstellen eines Vorlaufs, Gleichlaufs oder Nachlaufs in bestimmten Fahrsituationen stabilisierend wirken und beispielsweise einem Unter- oder Übersteuern entgegenwirken.

Durch gezieltes Einstellen eines Gleichlaufs kann beispielsweise ein bei Fahrten in abschüssigem Gelände problematisches Untersteuern, d.h. das nach außen Schieben des Fahrzeugs in einer Kurve über die Vorderräder, vermieden werden. Der Gleichlauf ermöglicht außerdem, wie vorstehend bereits erläutert, einen besonders energieeffizienten Betrieb des Fahrzeugs.

In einer weiteren vorteilhaften Ausgestaltung ist der Differenz-Korrekturfaktor dabei zumindest für einige Fahrsituationen derart vordefiniert, dass in diesen Fahrsituationen jeweils eine bestmögliche Traktion und damit insbesondere eine bestmögliche Zugleistung des Fahrzeugs erreicht wird.

In einer weiteren vorteilhaften Ausgestaltung eines erfindungsgemäßen Verfahrens, wobei die Einrichtung zur Erfassung von Fahrzustandsgrößen dazu ausgebildet ist, neben der Ist-Drehzahl der ersten Achse wenigstens eine weitere Fahrzustandsgröße zu erfassen, wird wenigstens eine weitere Fahrzustandsgröße erfasst und der Differenz-Korrekturfaktor in Abhängigkeit von wenigstens einer weiteren, erfassten Fahrzustandsgröße mittels eines vordefinierten Kennfeldes und/oder durch eine vordefinierte, von wenigstens einer weiteren, erfassten Fahrzustandsgröße abhängigen, mathematischen Funktion bestimmt.

Vorzugsweise wird der Differenz-Korrekturfaktor dabei in Abhängigkeit von einer Fahrzeuggeschwindigkeit und/oder einer Gaspedalstellung und/oder einem Bremsdruck und/oder einem Lenkradwinkel und/oder einer Fahrzeugneigung und/oder einer Hangneigung und/oder einer von einem Fahrer eingegebenen Geländebeschaffenheit und/oder eines vom Fahrer eingegebenen gewünschten Fahrweges bestimmt. Selbstverständlich kann der Differenz-Korrekturfaktor auch in Abhängigkeit anderer, hier nicht aufgezählter Fahrzustandsgrößen ermittelt werden. Es hat sich jedoch als besonders vorteilhaft erwiesen, wenn der Differenz-Korrekturfaktor in Abhängigkeit von wenigstens einer Größe bestimmt wird, welche die Fahrzeuggeschwindigkeit, eine Fahrzeugbeschleunigung, einen Bremszustand, einen Lenkzustand und/oder eine Geländebeschaffenheit beschreibt.

Unter Geländebeschaffenheit wird im Sinne der Erfindung dabei die Beschaffenheit sowie die Ausrichtung, d.h. die Hangneigung, des Untergrunds bezeichnet auf welchem sich das Fahrzeug fortbewegt.

In einer weiteren vorteilhaften Ausgestaltung eines erfindungsgemäßen Verfahrens wird die Soll-Drehzahl zusätzlich in Abhängigkeit von einem vordefinierten Schlupf-Drehzahl-Anteil ermittelt, wobei der Schlupf-Drehzahl-Anteil dazu dient, einen gewünschten Schlupf wenigstens eines Rades der zweiten Achse gegenüber dem Untergrund einzustellen, insbesondere einen Schlupf, mit dem eine möglichst optimale Traktion erreichbar ist. Dabei wird der Schlupf-Drehzahl-Anteil vorzugsweise in Abhängigkeit von der Ist-Drehzahl der ersten Achse und/oder in Abhängigkeit von wenigstens einer weiteren, von der Einrichtung zur Erfassung eines Fahrzustandes erfassten Fahrzustandsgröße bestimmt, insbesondere in Abhängigkeit von einer Fahrzeuggeschwindigkeit und/oder einer Gaspedalstellung und/oder einem Bremsdruck und/oder einem Lenkradwinkel und/oder einer Fahrzeugneigung und/oder einer Hangneigung und/oder einer von einem Fahrer eingegebenen Geländebeschaffenheit und/oder eines vom Fahrer eingegebenen gewünschten Fahrweges.

Vorzugsweise wird der Schlupf-Drehzahl-Anteil dabei in Abhängigkeit von wenigstens einer erfassten Fahrzustandsgröße, insbesondere in Abhängigkeit von der Geländebeschaffenheit, mittels eines vordefinierten Kennfeldes und/oder durch eine vordefinierte, von wenigstens einer weiteren, erfassten Fahrzustandsgröße abhängigen, mathematischen Funktion bestimmt.

Dadurch ist es möglich, den Schlupf an wenigstens einem Rad der zweiten Achse gezielt in Abhängigkeit vom Fahrzustand einzustellen, insbesondere in Abhängigkeit von einer Geländebeschaffenheit. Dadurch kann eine besonders gute Traktion erreicht werden, denn die maximale Haftung wird abhängig vom Untergrund bei unterschiedlichen Schlupfwerten erreicht, auf trockenem Asphalt wird die maximale Haftung beispielsweise bei einem Schlupf von etwa 12% erreicht, auf trockenem Schotter hingegen beispielsweise bei etwa 30%.

Wie vorstehend im Zusammenhang mit dem Differenz-Korrekturfaktor erläutert, kann der Schlupf-Drehzahl-Anteil selbstverständlich auch in Abhängigkeit anderer, hier nicht aufgezählter Fahrzustandsgrößen ermittelt werden. Es hat sich jedoch auch in Bezug auf diese Größe als besonders vorteilhaft erwiesen, wenn der Schlupf-Drehzahl-Anteil in Abhängigkeit von wenigstens einer Größe bestimmt wird, welche die Fahrzeuggeschwindigkeit, eine Fahrzeugbeschleunigung, einen Bremszustand, einen Lenkzustand und/oder eine Geländebeschaffenheit beschreibt.

In einer weiteren vorteilhaften Ausgestaltung des erfindungsgemäßen Verfahrens wird die Soll-Drehzahl in Abhängigkeit von der Summe aus der Synchron-Soll-Drehzahl, dem Differenz-Drehzahl-Anteil und dem Schlupf-Drehzahl-Anteil ermittelt, insbesondere durch die Summe aus der Synchron-Soll-Drehzahl, dem Differenz-Drehzahl-Anteil und dem Schlupf-Drehzahl-Anteil.

In einer weiteren vorteilhaften Ausgestaltung des erfindungsgemäßen Verfahrens, wobei die Steuerungseinrichtung des Fahrzeugs zur Einstellung einer auf die erste Achse übertragbaren Antriebsleistung ausgebildet ist, wird die auf die erste Achse übertragene Antriebsleistung derart eingestellt, dass sich in Abhängigkeit von einem erfassten Fahrzustand ein gewünschter Schlupf an den Rädern der ersten Achse gegenüber dem Untergrund einstellt, insbesondere ein Schlupf, mit dem eine möglichst optimale Traktion erreichbar ist. Vorzugsweise wird die auf die erste Achse übertragene Antriebsleistung dabei in Abhängigkeit von einer Fahrzeuggeschwindigkeit und/oder einer Gaspedalstellung und/oder einem Bremsdruck und/oder einem Lenkradwinkel und/oder einer Fahrzeugneigung und/oder einer Hangneigung und/oder einer von einem Fahrer eingegebenen Geländebeschaffenheit und/oder eines vom Fahrer eingegebenen, gewünschten Fahrweges eingestellt.

In einer weiteren vorteilhaften Ausgestaltung des erfindungsgemäßen Verfahrens ist das Fahrzeug mit einem Arbeitsgerät gekoppelt und bildet mit dem Arbeitsgerät ein Gespann, wobei das Fahrzeug ein Zugfahrzeug des Gespanns bildet, wobei das Arbeitsgerät wenigstens eine antreibbare Achse aufweist und wobei die Steuerungseinrichtung des Fahrzeugs zur Einstellung einer auf die antreibbare Achse übertragbaren Antriebsleistung ausgebildet ist. Dabei kann die auf die angetriebene Achse des Arbeitsgerätes übertragene Antriebsleistung derart eingestellt werden, dass sich in Abhängigkeit von einem erfassten Fahrzustand ein gewünschter Schlupf an den Rädern der angetriebenen Achse des Arbeitsgerätes gegenüber dem Untergrund einstellt, insbesondere ein Schlupf, mit dem eine möglichst optimale Traktion des Gespanns erreichbar ist.

In einer weiteren vorteilhaften Ausgestaltung des erfindungsgemäßen Verfahrens kann die auf die antreibbare Achse des Arbeitsgerätes übertragene Antriebsleistung derart eingestellt werden, dass sich an allen angetriebenen Achsen des Gespanns der gleiche Schlupf einstellt, d.h. jeweils die gleiche Differenz zwischen der Radumfangsgeschwindigkeit des Rades und der aktuellen Fahrzeuggeschwindigkeit relativ zum jeweiligen Untergrund, bezogen auf die aktuelle Fahrzeuggeschwindigkeit, oder dass sich ein über die angetriebenen Achsen des Gespanns abnehmender Schlupf in Längsrichtung bezogen auf Vorwärtsfahrt einstellt, d.h. bezogen auf die Fahrtrichtung stellt sich an der vordersten Achse ein größerer Schlupf ein als an der mittleren Achse und an der mittleren Achse stellt sich ein größerer Schlupf ein als an der hintersten Achse, oder dass sich ein über die angetriebenen Achsen des Gespanns zunehmender Schlupf in Längsrichtung bezogen auf Vorwärtsfahrt einstellt, d.h. bezogen auf die Fahrtrichtung stellt sich an der vordersten Achse ein kleinerer Schlupf ein als an der mittleren Achse und an der mittleren Achse stellt sich ein kleinerer Schlupf ein als an der hintersten Achse.

Als besonders vorteilhaft hat sich jedoch die Einstellung eines über die angetriebenen Achsen des Gespanns abnehmenden Schlupfes in Längsrichtung bezogen auf Vorwärtsfahrt gezeigt, da auf diese Weise eine Bodenverdichtung durch die voranfahrenden Räder bei den nachfolgenden, hinteren Rädern berücksichtigt werden kann, so dass die Räder sämtlicher angetriebener Achsen jeweils im optimalen Schlupfbereich und damit jeweils im Bereich optimaler Haftung angetrieben werden können, wodurch die Traktion und damit die übertragbare Zugkraft des Fahrzeugs noch weiter verbessert werden kann.

In einer weiteren vorteilhaften Ausgestaltung des erfindungsgemäßen Verfahrens kann zum Anfahren am Berg in Vorwärtsfahrtrichtung bergab, um ein Strecken des Gespanns beim Anfahren zu bewirken, die an die angetriebene Achse des Arbeitsgerätes übertragene Antriebsleistung derart eingestellt werden, dass sich relativ zum Schlupf der Räder der ersten Achse gegenüber dem Untergrund und relativ zum Schlupf der Räder der zweiten Achse gegenüber dem Untergrund ein voreilend negativer Schlupf der Räder der antreibbaren Achse des Arbeitsgerätes gegenüber dem Untergrund einstellt, d.h. ein Nachlauf gegenüber der ersten Achse und der zweiten Achse. Dadurch kann ein "Strecken" des Gespanns bewirkt werden und eine bessere Beherrschbarkeit des Gespanns erreicht werden. Selbstverständlich ist eine derartige Einstellung der auf die angetriebene Achse des Arbeitsgerätes übertragenen Antriebsleistung nicht auf das Anfahren am Berg bergab beschränkt, sondern kann auch in anderen Situationen erfolgen, insbesondere während der Bergabfahrt.

In einer weiteren vorteilhaften Ausgestaltung des erfindungsgemäßen Verfahrens kann der Schlupf derart eingestellt werden, dass sich eine gewünschte definierte Streckung einstellt, wobei die definierte Streckung vorzugsweise in Abhängigkeit vom Fahrzustand eingestellt werden kann. Dies ist insbesondere beim Anfahren in Vorwärtsfahrtrichtung bergab und beim Bremsen des Gespanns vorteilhaft, insbesondere beim Bremsen bergab, da durch eine definierte Streckung des Gespanns in der Regel die Stabilität des Gespanns verbessert werden kann.

In einer weiteren vorteilhaften Ausgestaltung des erfindungsgemäßen Verfahrens kann, um beim Anfahren in Vorwärtsfahrtrichtung bergab und/oder beim Bremsen des Gespanns einen definierten Schlupf einzustellen, insbesondere eine definierte Streckung, die zur Einstellung des definierten Schlupfes auf die Räder der antreibbaren Achse zu übertragende Antriebsleistung zusätzlich oder alternativ mittels einer zugehörigen Bremsvorrichtung eingestellt werden.

In einer weiteren vorteilhaften Ausgestaltung des erfindungsgemäßen Verfahrens wird zum Anfahren am Berg in Vorwärtsfahrtrichtung bergauf, um ein Stauchen des Gespanns beim Anfahren zu bewirken, die an die angetriebene Achse des Arbeitsgerätes übertragene Antriebsleistung derart eingestellt, dass sich relativ zum Schlupf der Räder der ersten Achse gegenüber dem Untergrund und relativ zum Schlupf der Räder der zweiten Achse gegenüber dem Untergrund ein voreilend positiver Schlupf der Räder, d.h. ein Vorlauf gegenüber der ersten Achse und der zweiten Achse, der antreibbaren Achse des Arbeitsgerätes gegenüber dem Untergrund einstellt. Dadurch kann ein "Stauchen" des Gespanns bewirkt werden, wodurch zum einen die Gefahr eines abrupten Haftungsverlustes der Räder der ersten Achse reduziert werden kann, insbesondere wenn es sich bei der ersten Achse um die Hinterachse des Fahrzeugs handelt. Zum anderen kann einer Entlastung der zweiten Achse, welche ebenfalls zu einer Verringerung der Traktion und damit zu einem Zugkraftverlust führen würde, entgegengewirkt werden, insbesondere wenn es sich bei der zweiten Achse um die Vorderachse des Fahrzeugs handelt. Selbstverständlich ist eine derartige Einstellung der auf die angetriebene Achse des Arbeitsgerätes übertragenen Antriebsleistung nicht auf das Anfahren am Berg bergauf beschränkt, sondern kann auch in anderen Situationen erfolgen, insbesondere während der Bergauffahrt.

In einer weiteren vorteilhaften Ausgestaltung des erfindungsgemäßen Verfahrens weist das Fahrzeug zusätzlich einen dritten Antriebsmotor auf, der ebenfalls dazu vorgesehen ist, wenigstens ein Rad der zweiten Achse anzutreiben, wobei der zweite Antriebsmotor zum Antrieb eines linken Rades der zweiten Achse vorgesehen ist und der dritte Antriebsmotor zum Antrieb eines rechten Rades der zweiten Achse, und wobei die Steuerungseinrichtung dazu ausgebildet ist, wenigstens in Abhängigkeit von der ermittelten Ist-Drehzahl der ersten Achse eine Soll-Drehzahl des linken Rades der zweiten Achse und eine Soll-Drehzahl des rechten Rades zu ermitteln und wenigstens die zum Antrieb der zweiten Achse vorgesehenen, zweiten und dritten Antriebsmotoren derart anzusteuern, dass sich jeweils am linken Rad und am rechten Rad der zweiten Achse die gewünschte Soll-Drehzahl einstellt, umfasst das Verfahren die Schritte: Ermitteln einer Ist-Drehzahl der ersten Achse, Ermitteln der Soll-Drehzahlen für das linke Rad der zweiten Achse und für das rechte Rad der zweiten Achse wenigstens in Abhängigkeit von der Ist-Drehzahl der ersten Achse, Ansteuern des zweiten Antriebsmotors und des dritten Antriebsmotors derart, dass sich die ermittelte Soll-Drehzahl am linken Rad und am rechten Rad der zweiten Achse einstellt.

D.h. mit anderen Worten, dass, wenn noch ein weiterer, nämlich ein dritter Antriebsmotor vorgesehen ist, welcher ebenfalls zum Antrieb der zweiten Achse vorgesehen ist, wobei der zweite Antriebsmotor zum Antrieb des linken Rades der zweiten Achse vorgesehen ist und der dritte Antriebsmotor zum Antrieb des rechten Rades, vorzugsweise eine Soll-Drehzahl für das linke Rad der zweiten Achse ermittelt wird und unabhängig davon eine Soll-Drehzahl für das rechte Rad der zweiten Achse. Dadurch kann eine besonders gute Traktion erreicht werden. Werden die Raddrehzahlen der Räder der ersten Achse jeweils separat erfasst, kann eine noch bessere Traktion erreicht werden, da eine noch bessere Anpassung der Radumfangsgeschwindigkeiten der Räder der zweiten Achse an die Radumfangsgeschwindigkeiten der Räder der ersten Achse erreicht werden kann.

In einer weiteren vorteilhaften Ausgestaltung des erfindungsgemäßen Verfahrens wird dabei vorzugsweise jeweils für das linke Rad der zweiten Achse und jeweils für das rechte Rad der zweiten Achse die Synchron-Soll-Drehzahl und/oder der Differenz-Drehzahl-Anteil und/oder der Schlupf-Drehzahl-Anteil ermittelt.

In einer weiteren vorteilhaften Ausgestaltung des erfindungsgemäßen Verfahrens wird zur Ansteuerung eines Antriebsmotors, vorzugsweise für jeden Antriebsmotor separat, in Abhängigkeit von der zugehörigen ermittelten Ist-Drehzahl der betreffenden Achse und/oder des betreffenden Rades der Achse eine Steuergröße ermittelt, wobei vorzugsweise die Steuergröße bei Überschreiten einer vordefinierten Steuergrößenschwelle auf einen maximalen Steuergrößenwert begrenzt wird.

Unter einer Steuergröße im Sinne der Erfindung wird dabei diejenige Größe verstanden, mit welcher der betreffende Antriebsmotor derart gerichtet beeinflusst werden kann, dass sich eine gewünschte Soll-Drehzahl an wenigstens einem Rad der zugehörigen Achse einstellt, wobei die Steuergröße, mit welcher der erste Antriebsmotor und/oder der zweite Antriebsmotor und/oder der dritte Antriebsmotor angesteuert werden können, vorzugsweise jeweils ein Soll-Drehmoment ist.

Unter einer Steuergrößenschwelle im Sinne der Erfindung wird ein Grenzwert für eine Steuergröße verstanden.

Die zugehörige Steuergrößenschwelle wird dabei vorzugsweise jeweils in Abhängigkeit vom Fahrzustand ermittelt, insbesondere in Abhängigkeit von einer Fahrzeuggeschwindigkeit und/oder einer Gaspedalstellung und/oder einem Bremsdruck und/oder einem Lenkradwinkel und/oder einer Fahrzeugneigung und/oder einer Hangneigung und/oder einer von einem Fahrer eingegebenen Geländebeschaffenheit und/oder eines vom Fahrer eingegebenen gewünschten Fahrweges und/oder einem Zustand des Antriebsmotors. Die Steuergrößenschwelle wird dabei vorzugsweise jeweils mittels eines vordefinierten Kennfeldes und/oder mittels einer vordefinierten, mathematischen Funktion bestimmt.

Mit Hilfe der Begrenzung der Steuergröße, welche im Wesentlichen eine Leistungsbegrenzung darstellt, kann insbesondere verhindert werden, dass eine weitere Zunahme des Antriebsmomentes an der Achse, an welcher die Antriebsleistung erhöht werden soll, zu einem Durchdrehen der Räder führt, so dass die Antriebsleistung im Ergebnis nur soweit erhöht wird, bis die Schlupfgrenze bzw. die Haftungsgrenze nach deren Überschreiten sich die Traktion wieder verschlechtert, erreicht ist.

In einer weiteren vorteilhaften Ausgestaltung des erfindungsgemäßen Verfahrens wird zur Ermittlung der Steuergröße des zweiten Antriebsmotors eine Ist-Drehzahl der zweiten Achse und/oder eines Rades der zweiten Achse erfasst und mit der zugehörigen Soll-Drehzahl verglichen und eine Regelabweichung der Ist-Drehzahl von der Soll-Drehzahl ermittelt, wobei in Abhängigkeit von der ermittelten Regelabweichung, vorzugsweise mittels eines Reglers, die Steuergröße bestimmt wird, die erforderlich ist, um die erforderliche Soll-Drehzahl an der zweiten Achse bzw. dem zugehörigen Rad der zweiten Achse einzustellen.

Enthält der Regler, mit welchem in Abhängigkeit von der Regelabweichung zwischen Ist-Drehzahl und Soll-Drehzahl der zweiten Achse die Steuergröße bestimmt wird, welche bei Überschreiten einer vordefinierten Steuergrößenschwelle auf einen maximalen Steuergrößenwert begrenzt werden kann, einen integralen Anteil, kann es durch ein Aufintegrieren der Abweichung der begrenzten Steuergröße von der unbegrenzten Steuergröße zu einer Instabilität des Reglers und damit zu einem unerwünschten Überschwingen der Steuergröße kommen. Dies kann durch Implementierung einer sogenannten Anti-Windup-Funktion vermieden werden. Die Implementierung von Anti-Windup-Funktionen in einem Regelsystem ist aus dem Stand der Technik grundsätzlich bekannt. Für nähere Erläuterungen diesbezüglich wird auf entsprechende Fachliteratur aus dem Bereich der Regelungstechnik verwiesen.

Um das Überschwingen der Steuergröße zu vermeiden, wird daher in einer vorteilhaften Ausgestaltung eines erfindungsgemäßen Verfahrens wenigstens eine Steuergröße, vorzugsweise jede Steuergröße, insbesondere jeweils eine begrenzte Steuergröße, zur Realisierung einer sogenannten Anti-Windup-Funktion rückgeführt, wobei die Steuergröße vorzugsweise derart rückgeführt ist, dass die Steuergröße in Abhängigkeit von der ermittelten Regelabweichung zwischen Ist-Drehzahl und Soll-Drehzahl der zweiten Achse und in Abhängigkeit von der rückgeführten Steuergröße bestimmt werden kann. Dadurch kann ein Überschwingen des Reglers, mit dessen Hilfe in Abhängigkeit von der Regelabweichung zwischen Ist-Drehzahl und Soll-Drehzahl der zweiten Achse die Steuergröße bestimmt wird, vermieden werden.

In einer weiteren vorteilhaften Ausgestaltung des erfindungsgemäßen Verfahrens, insbesondere für einen Fahrbetrieb des Fahrzeugs bei einer Hangschrägfahrt oder einer Hangquerfahrt, wobei die zweite Achse die Vorderachse des Fahrzeugs bildet, wird der Differenz-Drehzahl-Anteil zur Ermittlung der Soll-Drehzahl des talseitigen Vorderrades größer gewählt als der Differenz-Drehzahl-Anteil zur Ermittlung der Soll-Drehzahl des bergseitigen Vorderrades, um einem durch die Hangabtriebskraft verursachten Abdriften des Fahrzeugs entgegenzuwirken.

Unter einer Hangschrägfahrt wird im Sinne der Erfindung eine Fahrt mit Fahrtrichtung schräg zum Hang, d.h. schräg zu einer Hangneigung, verstanden. Unter einer Hangquerfahrt wird entsprechend im Sinne der Erfindung eine Fahrt mit Fahrtrichtung im Wesentlichen quer zum Hang, d.h. quer zu einer Hangneigung, verstanden. Das talseitige Vorderrad ist dabei das dem Tal bzw. der Talseite zugewandte Vorderrad, also das hangabwärtsseitige Vorderrad. Das bergseitige Vorderrad ist entsprechend das dem Berg bzw. der Bergseite zugewandte Vorderrad, also das hangaufwärtsseitige Rad.

Durch eine derartige, gezielte, separate Einstellung der Radumfangsgeschwindigkeiten der Räder der zweiten Achse bzw. in diesem Fall der Vorderachse kann bei einer Hangquerfahrt eine besonders gute Fahrzeugbeherrschung erreicht werden.

Die jeweiligen Differenz-Drehzahl-Anteile des talseitigen Vorderrades und des bergseitigen Vorderrades werden dabei vorzugsweise in Abhängigkeit von einer erfassten Fahrzeugneigung und/oder einer erfassten Hangneigung und/oder erfassten Lenkkräften ermittelt.

In einer weiteren vorteilhaften Ausgestaltung des erfindungsgemäßen Verfahrens, insbesondere für einen autonomen Fahrbetrieb des Fahrzeugs bei einer Hangquerfahrt, wobei das Fahrzeug für einen autonomen Fahrbetrieb ausgebildet ist und einen Lenkaktuator für eine autonome Einstellung eines Radlenkwinkels aufweist, werden der Radlenkwinkel und der jeweilige Differenz-Drehzahl-Anteil der beiden Vorderräder bei einer autonom durchgeführten Fahrt, vorzugsweise bei einer autonom durchgeführten Hangquerfahrt, in Abhängigkeit eines vom Fahrer vorgegebenen Fahrweges und/oder in Abhängigkeit von einer erfassten Hangneigung und/oder in Abhängigkeit von erfassten Lenkkräften derart eingestellt, dass ein Fahrwiderstand des Fahrzeugs reduziert, vorzugsweise minimiert wird.

Unter einem autonomen Fahrbetrieb wird dabei im Sinne der Erfindung die automatische Steuerung des Fahrzeugs anhand eines vorgegebenen Fahrweges verstanden, wobei der Fahrweg vorzugsweise vom Fahrer vorgegeben worden ist und in der Steuerungseinrichtung gespeichert und für die automatische Steuerung des Fahrzeugs bereitgehalten wird.

Unter dem Begriff Fahrwiderstand wird dabei der Widerstand verstanden, der überwunden werden muss, um das Fahrzeug fortzubewegen.

Die Reduzierung bzw. Minimierung des Fahrwiderstands kann dabei insbesondere erreicht werden, indem die Differenz-Drehzahl-Anteile der beiden Vorderräder jeweils derart eingestellt werden, dass ein für den zugehörigen Fahrzustand kleinstmöglicher Radlenkwinkel erforderlich ist bzw. ein für den vorgegebenen Fahrweg kleinstmöglicher Radlenkwinkel und damit eine kleinstmögliche Lenkwinkeleingabe. D.h. mit anderen Worten, die Differenz-Drehzahl-Anteile der beiden Vorderräder werden vorzugsweise jeweils derart eingestellt, dass zusätzlich zu einem für die gewünschte Fahrtrichtung erforderlichen Radlenkwinkelanteil möglichst kein Radlenkwinkelanteil auf die Vorderräder aufgebracht werden muss, um das Fahrzeug auf dem gewünschten Fahrweg zu halten und insbesondere ein Abdriften des Fahrzeugs zu verhindern.

Je kleiner der erforderliche Radlenkwinkel ist, desto weniger werden die Vorderräder schräg über den Untergrund geschoben und desto geringer sind die Reibungsverluste, der Fahrwiderstand sowie der Zugkraftbedarf, was sich insbesondere bei Hangquerfahrten oder bei einem Betrieb des Fahrzeugs mit einem Arbeitsgerät für sogenannte "schwere Bodenbearbeitung", wie beispielsweise bei einem Betrieb mit einem Pflug als Arbeitsgerät, besonders vorteilhaft auswirkt.

Vorzugsweise kann der autonome Fahrbetrieb unterbrochen werden, sobald eine vom Fahrer aufgebrachter Lenkwinkel- und/oder eine vom Fahrer aufgebrachte Lenkwinkelgeschwindigkeitseingabe einen vordefinierten Grenzwert überschreitet.

Das erfindungsgemäße zweispurige Fahrzeug mit wenigstens zwei antreibbaren Achsen, insbesondere ein zweispuriges, als Traktor oder als selbstfahrende Arbeitsmaschine ausgebildetes Fahrzeug mit wenigstens zwei antreibbaren Achsen, weist eine erste antreibbare Achse mit wenigstens zwei Rädern, eine zweite, antreibbare Achse mit wenigstens zwei Rädern, einen ersten Antriebsmotor, wenigstens einen zweiten Antriebsmotor, eine Einrichtung zur Erfassung von Fahrzustandsgrößen zur Ermittlung eines Fahrzustandes des Fahrzeugs und eine Steuerungseinrichtung auf, wobei der erste Antriebsmotor zum Antrieb wenigstens eines Rades der ersten Achse vorgesehen ist, wobei der zweite Antriebsmotor zum Antrieb wenigstens eines Rades der zweiten Achse vorgesehen ist, wobei die Einrichtung zur Erfassung von Fahrzustandsgrößen wenigstens dazu ausgebildet ist, eine Ist-Drehzahl der ersten Achse zu erfassen, und wobei die Steuerungseinrichtung dazu ausgebildet ist, wenigstens in Abhängigkeit von der ermittelten Ist-Drehzahl der ersten Achse eine Soll-Drehzahl für das wenigstens eine Rad der zweiten Achse zu ermitteln und wenigstens den zweiten Antriebsmotor derart anzusteuern, dass sich an dem wenigstens einen Rad der zweiten Achse die gewünschte Soll-Drehzahl einstellt.

Ein erfindungsgemäßes Fahrzeug ist zur Durchführung eines erfindungsgemäßen Verfahrens ausgebildet.

In einer vorteilhaften Ausgestaltung des erfindungsgemäßen Fahrzeugs kann die zweite Achse dabei vollkommen unabhängig, d.h. insbesondere nicht mechanisch mit der ersten Achse gekoppelt, angetrieben werden. Dadurch kann in vorteilhafter Weise eine bei herkömmlichen, aus dem Stand der Technik bekannten Fahrzeugen durch unterschiedliche Ist-Drehzahlen der ersten Achse und der zweiten Achse hervorgerufene, erhöhte Drehmomentbelastung eines Getriebes, welches sich in der Regel in Leistungsflussrichtung zwischen dem ersten Antriebsmotor und einer der beiden Achsen befindet, insbesondere eine erhöhte Drehmomentbelastung der Getriebeverzahnung, welche zu erhöhtem Verschleiß und Getriebeschäden führen kann, vermieden werden. Infolgedessen kann das Getriebe kleiner dimensioniert und damit leichter gebaut werden.

In einer vorteilhaften Ausgestaltung des erfindungsgemäßen Fahrzeugs ist dieses ein Hybridfahrzeug, wobei der erste Antriebsmotor, der zum Antrieb der ersten Achse vorgesehen ist, ein Verbrennungsmotor ist und wobei der zweite Antriebsmotor, der zumindest zum Antrieb eines Rades der zweiten Achse vorgesehen ist, eine als Elektromotor betreibbare elektrische Maschine ist. Vorzugsweise weist das Fahrzeug außerdem eine als Generator betreibbare elektrische Maschine und einen elektrischen Energiespeicher auf, wobei die als Generator betreibbare elektrische Maschine mittels des Verbrennungsmotors angetrieben werden kann und dazu ausgebildet ist, elektrische Energie an den elektrischen Energiespeicher und/oder an die als Elektromotor betreibbare elektrische Maschine abzugeben, und wobei die als Elektromotor betreibbare elektrische Maschine mittels der vom Generator und/oder der vom elektrischen Energiespeicher bereitgestellten elektrischen Energie angetrieben werden kann.

Im Sinne der Erfindung wird unter einem Hybridfahrzeug ein Fahrzeug mit einem Hybridantrieb verstanden, d.h. ein Fahrzeug mit mindestens zwei unterschiedlichen Energieumwandlern als Antriebsmotoren, beispielsweise mit einem Verbrennungsmotor zum Antrieb der ersten Achse und einem Elektromotor zum Antrieb der zweiten Achse oder umgekehrt.

In einer weiteren vorteilhaften Ausgestaltung des erfindungsgemäßen Fahrzeugs ist die als Generator betreibbare elektrische Maschine nicht nur dazu ausgebildet, elektrische Energie an den elektrischen Energiespeicher und/oder an die als Elektromotor betreibbare elektrische Maschine abzugeben, sondern ebenfalls dazu, elektrische Energie an Verbraucher des Fahrzeugs und/oder wenigstens ein Arbeitsgerät abzugeben, beispielsweise an einen Anhänger mit einer elektrisch antreibbaren Achse oder ein Arbeitsgerät mit einer elektrisch antreibbaren Achse.

Vorzugsweise kann dabei die vom Generator abgegebene elektrische Leistung gezielt eingestellt werden, insbesondere derart, dass die auf eine antreibbare Achse des Arbeitsgerätes übertragbare Antriebsleistung einer elektrischen Achse eines mit dem Fahrzeug zu einem Gespann gekoppelten Arbeitsgerätes traktionsoptimiert eingestellt werden kann, so dass eine Gesamt-Zugkraft des Gespanns maximiert werden kann.

Besonders bevorzugt kann generell eine auf die antreibbare Achse eines mit dem Fahrzeug gekoppelten Arbeitsgerätes übertragbare Antriebsleistung derart eingestellt werden, dass sich in Abhängigkeit von einem erfassten Fahrzustand ein gewünschter Schlupf an den Rädern der antreibbaren Achse des Arbeitsgerätes gegenüber dem Untergrund einstellt, insbesondere ein Schlupf, mit dem eine möglichst optimale Traktion des Gespanns erreichbar ist.

In einer weiteren vorteilhaften Ausgestaltung weist das erfindungsgemäße Fahrzeug in einem Leistungszweig vom ersten Antriebsmotor zur ersten Achse ein Getriebe auf, wobei die als Generator betreibbare elektrische Maschine in diesem Leistungszweig zwischen dem ersten Antriebsmotor und dem Getriebe angeordnet ist. Eine derartige Anordnung des Generators im Leistungszweig zwischen dem ersten Antriebsmotor und dem Getriebe führt dazu, dass die vom ersten Antriebsmotor abgegebene Leistung bereits vor dem Getriebe verzweigt werden kann, da ein Teil der Leistung zur Erzeugung der elektrischen Energie für die als Elektromotor betreibbare elektrische Maschine über den Generator abgeführt werden kann. Infolgedessen muss das Getriebe nicht auf die vom ersten Antriebsmotor abgegebene Leistung ausgelegt werden, sondern kann kleiner dimensioniert werden bzw. es wird möglich, auch kleiner dimensionierte Getriebe in Verbindung mit Antriebsmotoren mit höherer Leistungsabgabe einzusetzen.

In einer weiteren vorteilhaften Ausgestaltung ist ein erfindungsgemäßes Fahrzeug dabei derart ausgebildet, dass ein Leistungsanteil, der über den Generator abgeführt werden kann, gezielt, vorzugsweise situationsangepasst, eingestellt werden kann. Dadurch wird eine besonders effiziente Getriebeauslegung ermöglicht, insbesondere eine in Bezug auf das Gewicht des Getriebes besonders vorteilhafte Getriebeauslegung, da das Getriebe nicht mehr den in allen Situationen den infolge der vom ersten Antriebsmotor abgegebenen Leistung auftretenden Belastungen standhalten muss, sondern in belastungskritischen Situationen gezielt ein Leistungsanteil über den Generator abgeführt werden kann.

In einer weiteren vorteilhaften Ausgestaltung des erfindungsgemäßen Fahrzeugs kann die gesamte, vom ersten Antriebsmotor abgegebene Leistung über den Generator abgeführt werden, so dass die vom Verbrennungsmotor abgegebene Leistung vollständig zur Erzeugung elektrischer Energie für den Antrieb der zweiten Achse und/oder zum Aufladen des elektrischen Energiespeichers genutzt werden kann.

Dadurch kann beispielsweise bei Fahrten ohne übermäßige Belastungsanforderungen und ohne Notwendigkeit eines Allradantriebs, zum Beispiel bei Fahrten auf befestigten Wegen und Straßen, das Fahrzeug nur durch einen elektrischen Antrieb der zweiten Achse bewegt werden während der Antrieb der ersten Achse deaktiviert ist. Die Bereitstellung der zum Antrieb erforderlichen Energie erfolgt dabei vorzugsweise über den vom Verbrennungsmotor angetriebenen Generator. Vorteilhaft an diesem Modus ist, dass der Verbrennungsmotor in einem verbrauchsoptimalen und damit wirkungsgradoptimalen Drehzahlbereich betrieben werden kann, so dass ein besonders kraftstoffsparender und damit effizienter Betrieb des Fahrzeugs erreicht werden kann.

In einer weiteren vorteilhaften Ausgestaltung weist das erfindungsgemäße Fahrzeug eine Kupplung zum Trennen der ersten Achse vom ersten Antriebsmotor auf, wobei die Kupplung besonders bevorzugt in Leistungsflussrichtung zwischen dem Generator und dem Getriebe angeordnet ist. Dadurch ist in dem vorbeschriebenen Modus, in welchem das Fahrzeug nur durch den elektrischen Antrieb der zweiten Achse bewegt wird, ein besonders effizienter Fahrbetrieb mit einem besonders guten Wirkungsgrad möglich, da insbesondere Reibungsverluste reduziert werden können. Gegenüber aus dem Stand der Technik bekannten Fahrzeugen, bei denen die Allradzu- bzw. Abschaltung üblicherweise meist über am Getriebeboden im Getriebeöl laufende Lamellenkupplungen erfolgt, hat die vorbeschriebene Anordnung der Kupplung außerhalb des Getriebes den Vorteil, dass keine hohen, mit zunehmender Fahrgeschwindigkeit zunehmenden Plansch- und Schleppverluste entstehen, welche bei den aus dem Stand der Technik bekannten Fahrzeugen immer, auch bei abgeschaltetem Allradantrieb auftreten.

In einer weiteren, alternativen oder zusätzlichen, vorteilhaften Ausgestaltung ist ein erfindungsgemäßes, vorbeschriebenes Fahrzeug dazu ausgebildet, rein elektrisch zu fahren, d.h. nur mit elektrischem Antrieb ohne das der Verbrennungsmotor läuft. Dies kann besonders für kurze Strecken bei langsamer Fahrt vorteilhaft sein, insbesondere beim Rangieren. Denkbar ist sogar ein ferngesteuertes, elektrisches Fahren, bei dem sich der Fahrer nicht im Fahrzeug sondern außerhalb befindet. Dies könnte beispielsweise bei einem Traktor eine sinnvolle Anwendung sein, um sehr effizient das Futter von Tieren in Stallungen verteilen zu können. Ein Traktor könnte ferngesteuert, mit abgeschaltetem Verbrennungsmotor und damit ohne Abgase zu erzeugen, die Stallgasse entlangfahren und dabei das Futter abladen, während der Landwirt neben oder hinter dem Fahrzeug herläuft und das Futter an die Tiere verteilt.

In einer weiteren, besonders vorteilhaften Ausgestaltung ist ein erfindungsgemäßes Fahrzeug, insbesondere ein erfindungsgemäßes Hybridfahrzeug, zur Energierückgewinnung im Bremsbetrieb ausgebildet, d.h. zur Rekuperation, und/oder zur Abgabe eines elektrisch erzeugten Antriebsmoments ausgebildet, d.h. zum sogenannten "Boosten", ohne dabei den Verbrennungsmotor zusätzlich zu belasten.

In einer weiteren vorteilhaften, alternativen oder zusätzlichen Ausgestaltung kann die als Generator betreibbare elektrische Maschine auch als Elektromotor betrieben werden, beispielsweise als Antriebsmotor für den Verbrennungsmotor, insbesondere als Startermotor für den Verbrennungsmotor, oder als Antrieb für einen Nebenabtrieb, insbesondere als Antrieb für eine sogenannte "Zapfwelle", wobei die elektrische Maschine dazu vorzugsweise vom Energiespeicher mit elektrischer Energie versorgt werden kann während der Verbrennungsmotor abgeschaltet ist. Diese auch als "Power Take-Off" bezeichnete Antriebsart ist insbesondere von Traktoren her bekannt, und kann eingesetzt werden, um bei stehendem Fahrzeug mit dem Fahrzeug gekoppelte, mechanisch antreibbare Arbeitsgeräte, wie beispielsweise einen Holz-Splitter oder dergleichen, anzutreiben.

Durch den elektrischen Antrieb des Nebenabtriebs mittels des "Generators", der vom elektrischen Energiespeicher mit elektrischer Energie versorgt werden kann und der dadurch ermöglichten Abschaltung des Verbrennungsmotors, sind die sich im Arbeitsbereich des Arbeitsgerätes aufhaltenden Personen nicht den Abgasen des Verbrennungsmotors ausgesetzt. Ferner kann der Kraftstoffverbrauch reduziert werden und die CO2-Emissionen können gesenkt werden.

In einer weiteren vorteilhaften Ausgestaltung weist das erfindungsgemäße Fahrzeug zusätzlich einen dritten Antriebsmotor auf, wobei der dritte Antriebsmotor ebenfalls dazu vorgesehen ist, die zweite Achse zumindest teilweise anzutreiben. Dabei ist vorzugsweise der zweite Antriebsmotor zum Antrieb eines linken Rades der zweiten Achse vorgesehen und der dritte Antriebsmotor zum Antrieb eines rechten Rades der zweiten Achse, wobei die Steuerungseinrichtung dazu ausgebildet ist, wenigstens in Abhängigkeit von der ermittelten Ist-Drehzahl der ersten Achse eine Soll-Drehzahl des linken Rades der zweiten Achse und eine Soll-Drehzahl des rechten Rades zu ermitteln und wenigstens die zum Antrieb der zweiten Achse vorgesehenen, zweiten und dritten Antriebsmotoren derart anzusteuern, dass sich jeweils am linken Rad und am rechten Rad der zweiten Achse die gewünschte Soll-Drehzahl einstellt. Vorzugsweise sind der zweite Antriebsmotor und der dritte Antriebsmotor dabei jeweils als Elektromotoren betreibbare elektrische Maschinen, insbesondere elektrische Radnabenmotoren.

Mit jeweils einem dem linken Rad und einem dem rechten Rad der zweiten Achse zugeordneten Radnabenmotor ist nicht nur eine besonders genaue und damit besonders gut an eine Fahrsituation anpassbare Einstellung der Radumfangsgeschwindigkeiten der Räder zweiten Achse möglich, sondern es ist außerdem kein Differentialgetriebe mehr an der zweiten Achse erforderlich. Dadurch ergibt sich ein beträchtliches Gewichtseinsparpotenzial.

Darüber hinaus kann, wenn die zweite Achse eine lenkbare Achse ist, auch ein besonders enger Wendekreis, d.h. ein besonders kleiner Wenderadius, realisiert werden, indem an den Rädern der zweiten Achse gezielt unterschiedliche Raddrehzahlen, insbesondere gezielt unterschiedliche Radumfangsgeschwindigkeiten eingestellt werden. Ferner kann auch bei einem großen Lenkeinschlag und sich infolgedessen großen, einstellenden Radlenkwinkeln, insbesondere auch bei maximalen Lenkeinschlag, die Traktion verbessert werden.

In einer alternativen, vorteilhaften Ausgestaltung des erfindungsgemäßen Fahrzeugs ist der erste Antriebsmotor, der zum Antrieb der ersten Achse vorgesehen ist, eine als Elektromotor betreibbare elektrische Maschine und der zweite Antriebsmotor, der zumindest zum Antrieb eines Rades der zweiten Achse vorgesehen ist, ist ebenfalls eine als Elektromotor betreibbare elektrische Maschine. Vorzugsweise weist das Fahrzeug außerdem einen Verbrennungsmotor und eine als Generator betreibbare elektrische Maschine und einen elektrischen Energiespeicher auf, wobei die als Generator betreibbare elektrische Maschine mittels des Verbrennungsmotors angetrieben werden kann und dazu ausgebildet ist, elektrische Energie an den elektrischen Energiespeicher und/oder an die jeweils als Elektromotor betreibbaren elektrischen Maschinen abzugeben. Die als Elektromotor betreibbaren elektrischen Maschinen können jeweils mittels der vom Generator und/oder der vom elektrischen Energiespeicher bereitgestellten elektrischen Energie angetrieben werden. Vorzugsweise weist der Verbrennungsmotor dabei keine mechanische Verbindung zur ersten Achse und/oder zur zweiten Achse auf.

In einer weiteren alternativen, vorteilhaften Ausgestaltung des erfindungsgemäßen Fahrzeugs sind zum Antrieb der ersten Achse zwei jeweils als Elektromotor betreibbare elektrische Maschinen vorgesehen, d.h. mit anderen Worten, der erste Antriebsmotor wird in diesem Fall durch zwei Elektromotoren gebildet, vorzugsweise durch zwei Radnabenmotoren, wobei insbesondere jeweils ein Radnabenmotor einem Rad der ersten Achse zugeordnet ist. Vorzugsweise weist das Fahrzeug außerdem einen Verbrennungsmotor und eine als Generator betreibbare elektrische Maschine und einen elektrischen Energiespeicher auf, wobei die als Generator betreibbare elektrische Maschine mittels des Verbrennungsmotors angetrieben werden kann und dazu ausgebildet ist, elektrische Energie an den elektrischen Energiespeicher und/oder an die jeweils als Elektromotor betreibbaren elektrischen Maschinen abzugeben. Die als Elektromotor betreibbaren elektrischen Maschinen können jeweils mittels der vom Generator und/oder der vom elektrischen Energiespeicher bereitgestellten elektrischen Energie angetrieben werden. Vorzugsweise weist der Verbrennungsmotor dabei keine mechanische Verbindung zur ersten Achse und/oder zur zweiten Achse auf.

Diese und weitere Merkmale und Vorteile gehen außer aus den Ansprüchen und aus der Beschreibung auch aus den Zeichnungen hervor, wobei die einzelnen Merkmale jeweils für sich allein oder zu mehreren in Form von Unterkombinationen bei einer Ausgestaltung der Erfindung verwirklicht sein können und eine vorteilhafte, sowie für sich genommen schutzfähige Ausführung darstellen können.

Manche der genannten Merkmale bzw. Eigenschaften betreffen sowohl ein erfindungsgemäßes Verfahren sowie ein erfindungsgemäßes Fahrzeug. Einige dieser Merkmale und Eigenschaften werden nur einmal beschrieben, gelten jedoch unabhängig voneinander im Rahmen technisch möglicher Ausgestaltungen sowohl für ein erfindungsgemäßes Verfahren als auch für ein erfindungsgemäßes Fahrzeug.

Im Folgenden wird die Erfindung anhand einiger Ausführungsbeispiele weiter erläutert, wobei die Erfindung dazu in den beigefügten Zeichnungen schematisch dargestellt ist. Dabei zeigt
- Fig. 1: in Prinzipdarstellung ein erstes Ausführungsbeispiel eines erfindungsgemäßen Fahrzeugs,
- Fig. 2: in Prinzipdarstellung ein zweites Ausführungsbeispiel eines erfindungsgemäßen Fahrzeugs,
- Fig. 3: in Prinzipdarstellung ein drittes Ausführungsbeispiel eines erfindungsgemäßen Fahrzeugs,
- Fig. 4: in Prinzipdarstellung ein viertes Ausführungsbeispiel eines erfindungsgemäßen Fahrzeugs,
- Fig. 5: ein vereinfachtes Blockschaltbild zur Darstellung eines ersten Ausführungsbeispiels eines erfindungsgemäßen Verfahrens zur Steuerung der Raddrehzahlen der Vorderräder des erfindungsgemäßen Fahrzeugs aus Fig. 1,
- Fig. 6: ein vereinfachtes Blockschaltbild zur Darstellung eines zweiten Ausführungsbeispiels eines erfindungsgemäßen Verfahrens zur Steuerung der Raddrehzahlen der Vorderräder des erfindungsgemäßen Fahrzeugs aus Fig. 2,
- Fig. 7: ein vereinfachtes Blockschaltbild zur Darstellung eines dritten Ausführungsbeispiels eines erfindungsgemäßen Verfahrens zur Steuerung der Raddrehzahlen der Vorderräder des erfindungsgemäßen Fahrzeugs aus Fig. 3 und
- Fig. 8: ein vereinfachtes Blockschaltbild zur Darstellung eines vierten Ausführungsbeispiels eines erfindungsgemäßen Verfahrens zur Steuerung der Raddrehzahlen der Vorderräder des erfindungsgemäßen Fahrzeugs aus Fig. 4.

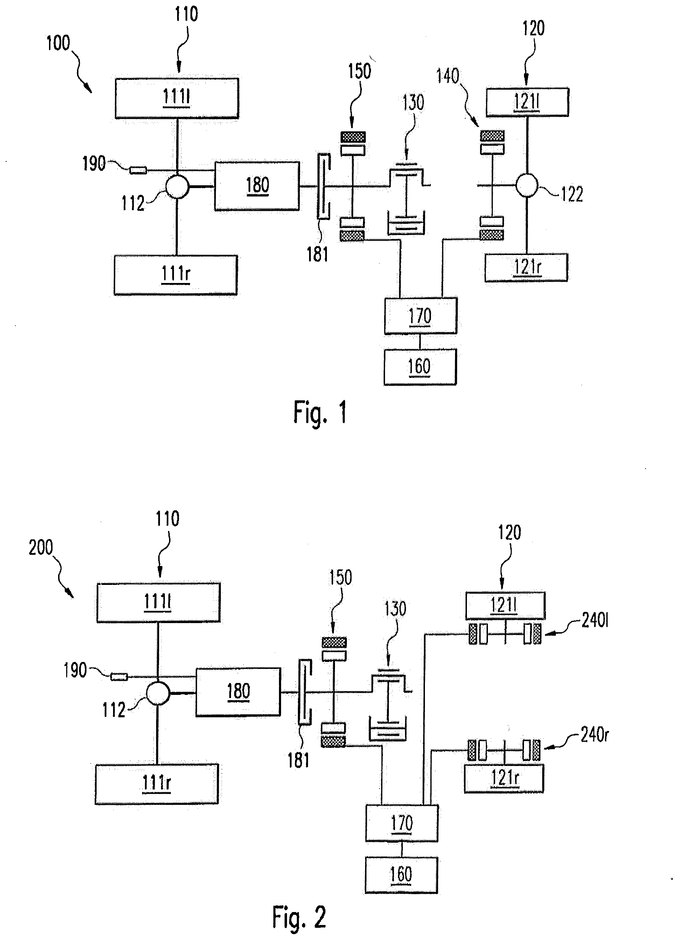

Bei dem in Fig. 1 in Prinzipdarstellung gezeigten, erfindungsgemäßen, zweispurigen Fahrzeug 100 handelt es sich um einen, zur Durchführung eines erfindungsgemäßen Verfahrens ausgebildeten, als Hybridfahrzeug ausgebildeten Traktor, mit einer die Hinterachse bildenden ersten Achse 110 sowie einer zweiten, die Vorderachse bildenden Achse 120, wobei die Hinterachse 110 und die Vorderachse 120 jeweils ein linkes Rad 111ₗ bzw. 121ₗ sowie ein rechtes Rad 111ᵣ bzw. 121ᵣ aufweisen.

Zum Antrieb des Traktors 100 sind ein erster Antriebsmotor 130 sowie ein zweiter Antriebsmotor 140 vorgesehen, wobei der erste Antriebsmotor 130 ein Verbrennungsmotor ist und der zweite Antriebsmotor 140 eine als Elektromotor betreibbare elektrische Maschine. Der Verbrennungsmotor 130 ist dabei zum Antrieb der Hinterachse 110 vorgesehen, während der Elektromotor 140 zum Antrieb der Vorderachse 120 vorgesehen ist. Die Hinterachse 110 und die Vorderachse 120 können dabei mechanisch unabhängig voneinander angetrieben werden, d.h. der Antriebsstrang der Hinterachse 110, mit welchem die Leistung vom Verbrennungsmotor 130 zur Hinterachse 110 übertragen wird, ist nicht mechanisch mit dem Antriebsstrang der Vorderachse 120 gekoppelt, mit welchem die Leistung vom Elektromotor 140 zur Vorderachse 120 übertragen wird.

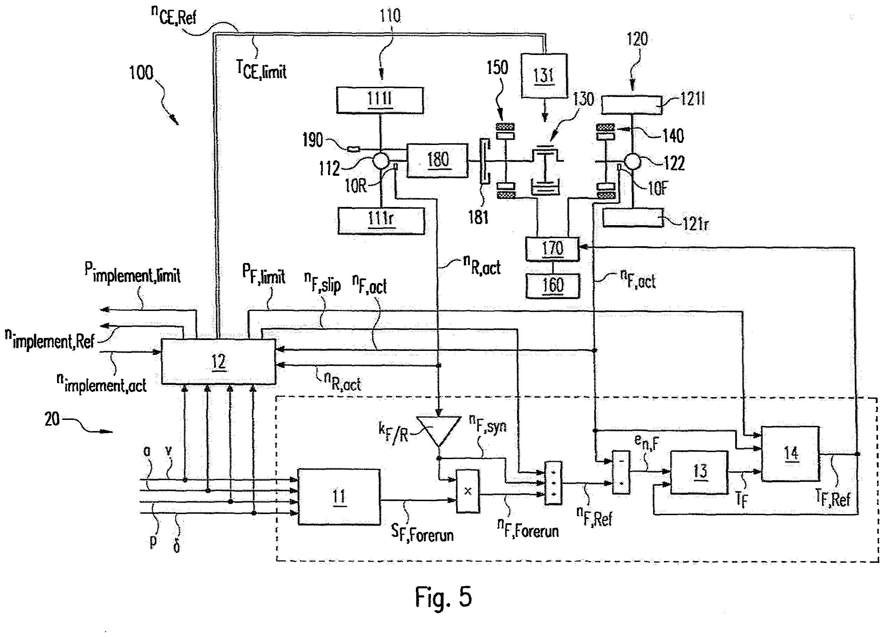

Um die Raddrehzahlen der Rädern 121ₗ und 121ᵣ der Vorderachse 120 gemäß eines erfindungsgemäßen Verfahrens steuern zu können, weist der Traktor ferner eine, in Fig. 1 nicht abgebildete Einrichtung zur Erfassung von Fahrzustandsgrößen zur Ermittlung eines Fahrzustandes sowie eine in Fig. 1 ebenfalls nicht dargestellte Steuerungseinrichtung auf, mittels der in Abhängigkeit von einer Ist-Drehzahl der Hinterräder 111ₗ und 111ᵣ eine gewünschte Soll-Drehzahl für die Räder 121ₗ und 121ᵣ der Vorderachse 120 ermittelt und eingestellt werden kann, wobei die Steuerungseinrichtung dazu ausgebildet ist, in Abhängigkeit von der ermittelten Soll-Drehzahl eine entsprechende Steuergröße zur Ansteuerung des Elektromotors 140 zu ermitteln und eine dem Elektromotor 140 zugeordnete Leistungselektronik 170 derart anzusteuern, dass sich an den Vorderrädern 121ₗ und 121ᵣ die gewünschte Soll-Drehzahl einstellt, vgl. Fig. 5.

Der Antriebsstrang der Hinterachse 110 weist dabei eine Kupplung 181, ein Getriebe 180 und ein Hinterachsdifferential 112 sowie entsprechende Wellen auf, wobei die vom Verbrennungsmotor 130 abgegebene Leistung über die Kupplung 181 und das Getriebe 180 zum Hinterachsdifferential 112 geführt werden kann, mittels welchem die Antriebsleistung auf die beiden Hinterräder 111ₗ und 111ᵣ verteilt wird. Dabei kann die vom Verbrennungsmotor 130 an das Getriebe 180 übertragene Leistung nicht nur zur Hinterachse 110 abgeführt werden, sondern auch über einen sogenannten Nebenabtrieb 190, welcher im Folgenden als sogenannte "Zapfwelle" bezeichnet wird und einen zusätzlichen Getriebeausgang darstellt, der zur Kopplung mit einem hier nicht dargestellten, mechanisch antreibbaren Arbeitsgerät, wie beispielsweise einem Holz-Splitter oder dergleichen ausgebildet ist.

Die vom Elektromotor 140 abgegebene Leistung wird zu einem Vorderachsdifferential 122 geführt und auf die beiden Vorderräder 121ₗ und 121ᵣ verteilt. Der Elektromotor 140 kann dabei die zum Antrieb der Vorderachse 120 erforderliche elektrische Energie aus einem elektrischen Energiespeicher 160 beziehen, sofern dieser entsprechend aufgeladen ist, und/oder direkt von einer als Generator betreibbaren elektrischen Maschine 150, wobei der Generator 150 zur Erzeugung elektrischer Energie vom Verbrennungsmotor 130 angetrieben werden kann.

Die vom Generator 150 erzeugte elektrische Energie kann entsprechend an den elektrischen Energiespeicher 160 sowie den Elektromotor 140 abgeben werden. Ferner kann die als Generator ausgebildete elektrische Maschine 150 elektrische Energie auch an weitere Verbraucher des Fahrzeugs 100 und/oder an ein hier nicht dargestelltes, mit dem Traktor 100 koppelbares und elektrisch antreibbares Arbeitsgerät abgeben, beispielsweise an einen Hänger mit einer elektrisch antreibbaren Achse oder ein anderes, elektrisch antreibbares Arbeitsgerät.

Der zur Bereitstellung der elektrischen Energie für den Elektromotor 140 sowie zum Aufladen des elektrischen Energiespeichers 160 vorgesehene Generator 150 ist dabei in vorteilhafter Weise im Leistungszweig vom Verbrennungsmotor 130 zur Hinterachse 110, bezogen auf eine Leistungsflussrichtung, zwischen dem Verbrennungsmotor 130 und dem Getriebe 180 angeordnet. Diese Anordnung hat den Vorteil, dass die vom Verbrennungsmotor 130 abgegebene Leistung bereits vor dem Getriebe 180 verzweigt werden kann und ein Teil der Leistung zur Erzeugung der elektrischen Energie für die als Elektromotor 140 betreibbare elektrische Maschine vor dem Getriebe 180 über den Generator 150 abgeführt werden kann. Dadurch wird das Getriebe 180 nicht mit der gesamten, vom Verbrennungsmotor 130 abgegebenen Leistung belastet, sondern nur mit der zum Antrieb der Hinterachse 110 vorgesehen Leistung. Infolgedessen muss das Getriebe 180 nicht auf die vom Verbrennungsmotor 130 maximal abgebbare Leistung ausgelegt werden, sondern kann kleiner dimensioniert werden bzw. das Getriebe 180 kann in Verbindung mit einem Verbrennungsmotor mit höherer Leistungsabgabe eingesetzt werden.

Bei diesem Ausführungsbeispiel eines erfindungsgemäßen Traktors 100 kann ferner der Anteil der Leistung, welcher über den Generator 150 abgeführt wird, gezielt, und damit situationsangepasst, eingestellt werden. Dadurch wird eine besonders vorteilhafte Getriebeauslegung möglich, da in belastungskritischen Situationen gezielt ein Leistungsanteil über den Generator 150 abgeführt werden kann.

Ferner ist es bei dem gezeigten Ausführungsbeispiel möglich, die vom Verbrennungsmotor 130 abgegebene Leistung vollständig zur Erzeugung elektrischer Energie für den Antrieb der Vorderachse 120 zu nutzen und/oder zum Aufladen des elektrischen Energiespeichers 160. Dadurch kann beispielsweise bei Fahrten ohne übermäßige Belastungsanforderungen und ohne Notwendigkeit eines Allradantriebs, zum Beispiel bei Fahrten auf befestigten Wegen und Straßen, der Traktor 100 nur durch den Antrieb der Vorderachse 120 mittels des Elektromotors 140 bewegt werden während der Antrieb der Hinterachse 110 deaktiviert ist. Die Bereitstellung der zum Antrieb der Vorderachse 120 erforderlichen Energie erfolgt dabei vorzugsweise über den vom Verbrennungsmotor 130 angetriebenen Generator 150. Vorteilhaft an diesem Modus ist, dass der Verbrennungsmotor 130 in einem verbrauchsoptimalen und damit wirkungsgradoptimalen Drehzahlbereich betrieben werden kann, so dass ein besonders kraftstoffsparender und damit effizienter Betrieb des Fahrzeugs erreicht werden kann.

Durch Öffnen der Kupplung 181 kann der Antriebsstrang der Hinterachse 110 aufgetrennt werden, so dass die Hinterachse 110 und das Getriebe 180 vom Verbrennungsmotor 130 entkoppelt werden. Dadurch können Reibungsverluste reduziert werden.

Bei abgeschaltetem Verbrennungsmotor 130 kann der Traktor 100 auch rein elektrisch fahren, d.h. nur mit elektrischem Antrieb. Dazu kann der Elektromotor 140 vom elektrischen Energiespeicher 160 mit elektrischer Energie versorgt werden.

Darüber hinaus kann die als Generator betreibbare elektrische Maschine 150 des Traktors 100 bei abgeschaltetem Verbrennungsmotor 130 auch als Elektromotor betrieben werden, beispielsweise als Startermotor für den Verbrennungsmotor 130 oder als Antrieb für den Nebenabtrieb 190, d.h. als Antrieb für die "Zapfwelle". Dazu kann auch die elektrische Maschine 150 vom Energiespeicher 160 mit elektrischer Energie versorgt werden. Diese auch als "Power Take-Off" bezeichnete Antriebsart ist insbesondere bei Fahrzeugen wie dem hier gezeigten erfindungsgemäßen Traktor 100 vorteilhaft, um bei stehendem Traktor 100 ein mit dem Traktor 100 gekoppeltes, hier nicht dargestelltes, mechanisch antreibbares Arbeitsgerät, wie beispielsweise einen Holz-Splitter oder dergleichen, anzutreiben.

Fig. 2 zeigt ein alternatives Ausführungsbeispiel eines erfindungsgemäßen Traktors 200, wobei der Traktor 200 sich darin von dem anhand von Fig. 1 beschriebenen Traktor 100 unterscheidet, dass zum Antrieb der Vorderachse 120 nicht nur ein Elektromotor 140 vorgesehen ist, d.h. lediglich ein zweiter Antriebsmotor 140, sondern zwei, jeweils als Elektromotoren betreibbare elektrische Maschinen 240ₗ und 240ᵣ, wobei der Elektromotor 240ₗ dabei zum Antrieb des linken Vorderrades 121ₗ vorgesehen ist und der Elektromotor 240ᵣ zum Antrieb des rechten Vorderrades 121ᵣ. Die beiden Elektromotoren 240ₗ und 240ᵣ sind dabei jeweils als Radnabenmotoren ausgebildet und ermöglichen eine separate Einstellung der Raddrehzahlen am linken Vorderrad 121ₗ und am rechten Vorderrad 121ᵣ unabhängig voneinander.

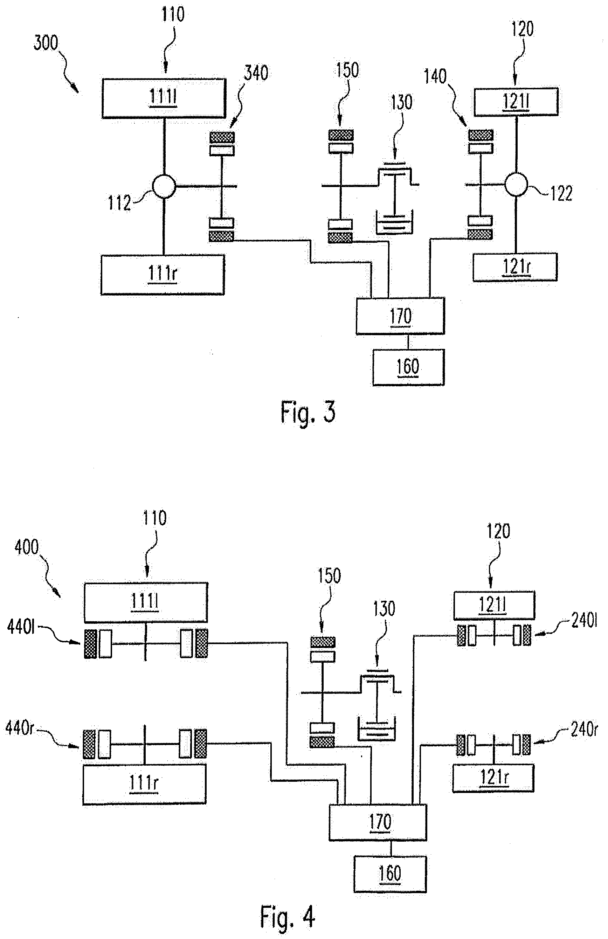

Fig. 3 zeigt ein weiteres alternatives Ausführungsbeispiel eines erfindungsgemäßen Fahrzeugs in Form eines Traktors 300, wobei der Traktor 300 sich darin von dem anhand von Fig. 1 beschriebenen Traktor 100 unterscheidet, das zum Antrieb der Hinterachse 110 nicht der Verbrennungsmotor 130 vorgesehen ist, sondern eine als Elektromotor betreibbare elektrische Maschine 340. D.h. der erste Antriebsmotor wird bei diesem erfindungsgemäßen Fahrzeug durch den Elektromotor 340 gebildet.

Ferner weist der Verbrennungsmotor 130 keine mechanische Verbindung mehr zur Hinterachse 110 auf, insbesondere sind zwischen dem Verbrennungsmotor 130 und der Hinterachse 110 kein Getriebe und keine Kupplung vorgesehen. Der Verbrennungsmotor 130 ist in diesem Fall hauptsächlich dazu vorgesehen, die als Generator betreibbare elektrische Maschine 150 anzutreiben.

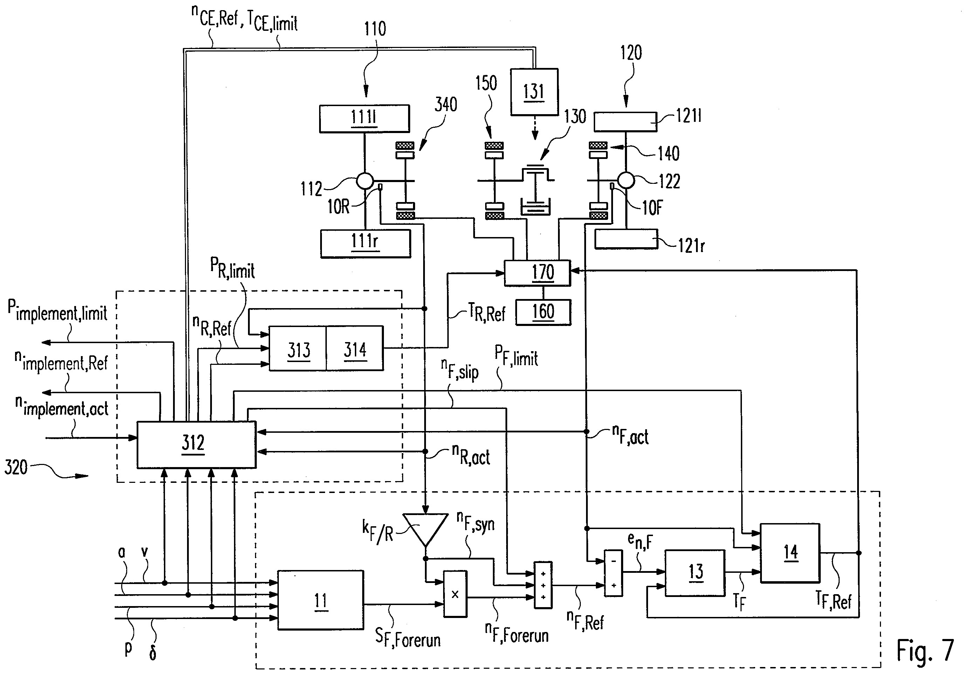

Der Elektromotor 340 kann dabei, wie der Antriebsmotor 140, der zum Antrieb der Vorderachse 120 vorgesehen ist, mittels einer hier nicht dargestellten Steuerungseinrichtung und der Leistungselektronik 170 derart angesteuert werden, dass sich an der Hinterachse 110 ebenfalls eine gewünschte Soll-Drehzahl einstellt, wobei die Steuerungseinrichtung dazu ausgebildet ist, in Abhängigkeit von der ermittelten Soll-Drehzahl eine entsprechende Steuergröße zur Ansteuerung des Elektromotors 340 zu ermitteln und die ebenfalls mit dem Elektromotor 340 gekoppelte Leistungselektronik 170 derart anzusteuern, dass sich an den Hinterrädern 111ₗ und 111ᵣ der Hinterachse 110 die gewünschte Soll-Drehzahl einstellt, vgl. Fig. 7.

Die vom Elektromotor 340 abgegebene Leistung wird dabei zu einem Hinterachsdifferential 112 geführt und auf die beiden Hinterräder 111ₗ und 111ᵣ verteilt. Die zum Antrieb der Hinterachse 110 erforderliche elektrische Energie kann der Elektromotor 340 dabei ebenfalls, wie der Elektromotor 140, aus dem elektrischen Energiespeicher 160 beziehen, sofern dieser entsprechend aufgeladen ist, und/oder direkt von der als Generator betreibbaren elektrischen Maschine 150.

Gegenüber dem anhand von Fig. 1 beschriebenen erfindungsgemäßen Traktor 100, hat der anhand von Fig. 3 beschriebene, erfindungsgemäße Traktor 300 den Vorteil, das aufgrund des zum Antrieb der Hinterachse 110 vorgesehenen Elektromotors 340, der eine anderes Leistungsverhalten aufweist, als ein Verbrenunngsmotor, eine sehr präzise und insbesondere dynamische Drehzahlsteuerung bzw. Drehzahlregelung der Hinterräder 111ₗ und 111ᵣ der Hinterachse 110 möglich ist, wodurch das Fahrverhalten noch weiter verbessert werden kann, insbesondere die Traktion.

Fig. 4 zeigt ein weiteres alternatives Ausführungsbeispiel eines erfindungsgemäßen Traktors 400, wobei der Traktor 400 sich darin von dem anhand von Fig. 3 beschriebenen Traktor 300 unterscheidet, dass zum Antrieb der Hinterachse 110 als erster Antriebsmotor nicht lediglich ein Elektromotor 340 vorgesehen ist, sondern zwei, jeweils ebenfalls als Elektromotoren betreibbare elektrische Maschine 440ₗ und 440ᵣ, wobei der Elektromotor 440ₗ dabei zum Antrieb des linken Hinterrades 111ₗ vorgesehen ist und der Elektromotor 440ᵣ zum Antrieb des rechten Hinterrades 111ᵣ. Des Weiteren ist kein Hinterachsdifferential vorgesehen. Die beiden Elektromotoren 440ₗ und 440ᵣ sind wie die Elektromotoren 240ₗ und 240ᵣ an der Vorderachse 120 ebenfalls jeweils als Radnabenmotoren ausgebildet und ermöglichen eine separate Einstellung der Raddrehzahlen am linken Hinterrad 111ₗ und am rechten Hinterrad 111ᵣ unabhängig voneinander. Ferner weist dieser erfindungsgemäße Traktor 400 wie der anhand von Fig. 3 beschriebene Traktor 300 zum Antrieb der Vorderachse 120 zwei, jeweils als Elektromotoren betreibbare elektrische Maschinen 240ₗ und 240ᵣ auf.

Fig. 5 zeigt ein vereinfachtes Blockschaltbild zur Darstellung eines erfindungsgemäßen Verfahrens zur Steuerung der Raddrehzahlen der Vorderachse 120 des Traktors 100 aus Fig. 1, wobei der Traktor 100 eine Einrichtung zur Erfassung von Fahrzustandsgrößen zur Ermittlung eines Fahrzustandes des Fahrzeugs aufweist mit einer entsprechenden Raddrehzahlsensorik 10_{R} zur Erfassung der Ist-Drehzahl n_{R,act} der Hinterachse 110 sowie einer entsprechenden Raddrehzahlsensorik 10_{F} zur Erfassung der Ist-Drehzahl n_{F,act} der Vorderachse 120.

Mittels der Steuerungseinrichtung 20 kann in Abhängigkeit von der ermittelten Ist-Drehzahl n_{R,act} der Hinterachse 110 eine Soll-Drehzahl n_{F,Ref} für die Räder 121ₗ, 121ᵣ der Vorderachse 120 ermittelt werden und der Elektromotor 140 derart angesteuert werden, dass sich an wenigstens einem Rad 121ₗ, 121ᵣ der Vorderachse 120 die gewünschte Soll-Drehzahl n_{F,Ref} einstellt.

Dazu wird die aktuelle Ist-Drehzahl n_{R,act} der Räder 111ₗ und 111ᵣ der Hinterachse 110 erfasst und zunächst mit einem, in der Steuerungseinrichtung 20 hinterlegten Synchron-Korrekturfaktor k_{F/R} multipliziert. Das sich aus der Ist-Drehzahl n_{R,act} und dem Synchron-Korrekturfaktor k_{F/R} ergebende Produkt ist die sogenannte Synchron-Soll-Drehzahl n_{F,syn}, bei welcher es sich um diejenige Soll-Drehzahl n_{F,Ref} handelt, bei welcher die Radumfangsgeschwindigkeit der Räder 121ₗ und 121ᵣ der Vorderachse 120 der Radumfangsgeschwindigkeit der Räder 111ₗ und 111ᵣ der Hinterachse 110 entspricht.

Der in der Steuerungseinrichtung hinterlegte Wert des Synchron-Korrekturfaktors k_{F/R} wird dabei ermittelt, indem in regelmäßigen Abständen während einer Fahrt auf festem Untergrund eine aktuelle Ist-Drehzahl n_{R,act} der Hinterachse 110 und eine aktuelle Ist-Drehzahl n_{F,act} der Vorderachse 120 erfasst werden, vorzugsweise gleichzeitig, und anschließend der Quotient aus der erfassten Ist-Drehzahl n_{F,act} der Vorderachse 120 und der erfassten Ist-Drehzahl n_{R,act} der Hinterachse 110 berechnet wird, wobei das Ergebnis dieses Quotienten der Wert des Synchron-Korrekturfaktors k_{F/R} ist.

Zur Ermittlung der Soll-Drehzahl n_{F,Ref} wird bei diesem beschriebenen Ausführungsbeispiel eines erfindungsgemäßen Verfahrens zur Synchron-Soll-Drehzahl n_{F,syn} ferner noch ein Differenz-Drehzahl-Anteil n_{F,Forerun} hinzuaddiert, wobei der Differenz-Drehzahl-Anteil n_{F,Forerun} in diesem Fall berechnet wird, indem die Synchron-Soll-Drehzahl n_{F,syn} mit einem Differenz-Korrekturfaktor s_{F,Forerun} multipliziert wird, der mithilfe eines vordefinierten, in der Steuerungseinrichtung 20 hinterlegten, vordefinierten Kennfeldes 11 in Abhängigkeit vom Fahrzustand ermittelt wird. Der Differenz-Korrekturfaktor s_{F,Forerun} wird dabei in diesem Fall in Abhängigkeit der Fahrzustandsgrößen Fahrzeuggeschwindigkeit v, Gaspedalstellung a, Bremsdruck p sowie Lenkwinkel δ ermittelt. Durch den Differenz-Korrekturfaktor s_{F,Forerun}, der vorzugsweise in Prozentpunkten angegeben wird, lässt sich die prozentuale Abweichung der Radumfangsgeschwindigkeit der Vorderräder 121ₗ und 121ᵣ der Vorderachse 120 zur Radumfangsgeschwindigkeit der Räder 111ₗ und 111ᵣ der Hinterachse 110 vorgeben, d.h. gezielt ein gewünschter Vorlauf, Gleichlauf oder Nachlauf einstellen.

Zur Traktionsoptimierung wird außerdem noch ein Schlupf-Drehzahl-Anteil n_{F,slip} zur Synchron-Soll-Drehzahl n_{F,syn} und dem Differenz-Drehzahl-Anteil n_{F,Forerun} hinzuaddiert, wobei der Schlupf-Drehzahl-Anteil n_{F,slip} ebenfalls fahrzustandsabhängig mittels eines, ebenfalls in der Steuerungseinrichtung 20, insbesondere in einer, einen Teil der Steuerungseinrichtung 20 bildenden Fahrzustandssteuerungseinrichtung 12, hinterlegten Kennfeldes ermittelt wird. Bei dem beschriebenen Ausführungsbeispiel erfolgt die Bestimmung des Schlupf-Drehzahl-Anteils n_{F,slip} ebenfalls in Abhängigkeit der Fahrzustandsgrößen Fahrzeuggeschwindigkeit v, Gaspedalstellung a, Bremsdruck p und Lenkwinkel δ. Selbstverständlich können alternativ oder zusätzlich auch andere Fahrzustandsgrößen oder andere Parameter wie beispielsweise eine vom Fahrer vorgegebene Geländebeschaffenheit, eine Hangneigung oder dergleichen berücksichtigt werden. Dadurch kann gezielt ein gewünschter Schlupf eingestellt werden und somit die Haftung und infolgedessen die Traktion des Traktors 100 optimiert werden.

Zur Einstellung der gewünschten Soll-Drehzahl n_{F,Ref} an den Rädern 121ₗ und 121ᵣ der Vorderachse 120 wird die ermittelte Ist-Drehzahl n_{F,act} der Vorderachse 120 mit der gewünschten Soll-Drehzahl n_{F,Ref} verglichen und die aktuelle Regelabweichung e_{n,F} ermittelt. Anhand der Regelabweichung e_{n,F} wird mittels eines entsprechenden Geschwindigkeitsreglers 13 eine erforderliche Steuergröße T_{F}, wobei es sich in diesem Fall um ein Soll-Drehmoment handelt, zur Ansteuerung des Elektromotors 140 ermittelt. Um zu vermeiden, dass der Elektromotor 140 beim Einstellen der gewünschten Soll-Drehzahl n_{F,Ref} an der Vorderachse 120 in einen kritischen Betriebszustand gelangt und beispielsweise einen zu hohen, die Leistungselektronik 170 des Elektromotors 140 beschädigende Stromaufnahme hat, und um zu vermeiden, dass sich die Traktion der Vorderachse 120 durch Einstellen der gewünschten Soll-Drehzahl n_{F,Ref} verschlechtert, ist eine Leistungsbegrenzungseinrichtung 14 vorgesehen, welche die ermittelte Steuergröße T_{F} zur Ansteuerung des Elektromotors 140 bei Überschreiten eines Steuergrößenschwellenwertes auf eine maximale Steuergröße T_{F,Ref} begrenzt. Beispielsweise wird die ermittelte Steuergröße T_{F} zur Ansteuerung des Elektromotors 140 begrenzt, wenn das Einstellen der Soll-Drehzahl n_{F,Ref} eine Zunahme der Ist-Drehzahl n_{F,act} erfordert, aber eines der Räder 121ₗ bzw. 121ᵣ der Vorderachse 120 sich bereits an der Haftungsgrenze befindet, so dass eine Zunahme der Radumfangsgeschwindigkeit des betreffenden Rades 121ₗ bzw. 121ᵣ zum Durchdrehen des Rades führen würde.

Die Leistungsbegrenzung der Steuergröße T_{F} erfolgt bei diesem Ausführungsbeispiel ebenfalls fahrzustandsabhängig. Dazu wird von der Fahrzustandssteuerungseinrichtung 12, ebenfalls in Abhängigkeit der Fahrzustandsgrößen Fahrzeuggeschwindigkeit v, Gaspedalstellung a, Bremsdruck p sowie dem Lenkwinkel δ in Abhängigkeit eines vordefinierten in der Steuereinrichtung 20 bzw. der Fahrzustandssteuerungseinrichtung 12 hinterlegten Kennfeldes, eine für die jeweilige Fahrsituation maximal zulässige Antriebsleistung P_{F,limit} des Elektromotors 140 bestimmt und an die Leistungsbegrenzungseinrichtung 14 übergeben.

Um ein Aufschwingen des Geschwindigkeitsreglers 13 zu vermeiden ist ferner zur Realisierung einer Anti-Windup-Funktion eine entsprechenden Rückkopplung der begrenzten Steuergröße T_{F,Ref} in den Regler 13 vorgesehen.

Anhand der von der Steuerungseinrichtung 20 ausgegebenen Steuergröße T_{F,Ref} des Elektromotors 140 kann mittels der Leistungselektronik 170 die gewünschte Antriebsleistung am Elektromotor 140 eingestellt werden, mit welcher sich an den Rädern 121ₗ und 121ᵣ der Vorderachse 120 die gewünschte Soll-Drehzahl n_{F,Ref} einstellt.

Wie im Zusammenhang mit Fig. 1 beschrieben, kann der Traktor 100 mit einem hier nicht dargestellten, elektrisch antreibbaren Arbeitsgerät, insbesondere mit einem Arbeitsgerät mit elektrisch antreibbarer Achse gekoppelt werden, wobei der Generator 150 auch dazu ausgebildet ist, elektrische Energie an ein mit dem Traktor 100 gekoppeltes und elektrisch antreibbares Arbeitsgerät abzugeben, beispielsweise an einen Hänger mit einer elektrisch antreibbaren Achse oder ein anderes, elektrisch antreibbares Arbeitsgerät.

Dabei kann die an die angetriebene Achse des Arbeitsgerätes übertragene Antriebsleistung mittels der Steuerungseinrichtung 20 gezielt eingestellt werden, wenn der Traktor 100 mit einem entsprechend geeigneten, mit dem Traktor 100 kompatiblen Arbeitsgerät mit einer antreibbaren Achse gekoppelt ist, insbesondere wenn der Traktor 100 mit einem kompatiblen Arbeitsgerät mit einer elektrisch antreibbaren Achse gekoppelt ist und ein Gespann bildet, wobei der Traktor 100 das Zugfahrzeug des Gespanns ist.

Die an die angetriebene Achse des Arbeitsgerätes übertragene Antriebsleistung kann dabei insbesondere derart eingestellt werden, dass sich in Abhängigkeit von einem erfassten Fahrzustand ein gewünschter Schlupf an den Rädern der angetriebenen Achse des Arbeitsgerätes gegenüber dem Untergrund einstellt, insbesondere ein Schlupf, mit dem eine möglichst optimale Traktion des Gespanns erreichbar ist und damit eine maximale Zugkraft.

Zur Einstellung der an die angetriebene Achse des Arbeitsgerätes übertragenen Antriebsleistung wird mittels der Fahrzustandssteuerungseinrichtung 12, ebenfalls in Abhängigkeit der Fahrzustandsgrößen Fahrzeuggeschwindigkeit v, Gaspedalstellung a, Bremsdruck p, dem Lenkwinkel δ und einer erfassten Ist-Drehzahl n_{implement,act} der angetriebenen Achse des Arbeitsgerätes sowie in Abhängigkeit einer hier nicht dargestellten, vom Fahrer eingegebenen Geländebeschaffenheit, insbesondere in Abhängigkeit von der Hangneigung, eine Soll-Drehzahl n_{implement,Ref} für die angetriebene Achse des Arbeitsgerätes ermittelt, in Abhängigkeit derer die Antriebsleitung der angetriebenen Achse des Arbeitsgerätes entsprechend eingestellt werden kann. Ebenfalls kann eine entsprechende maximal zulässige Antriebsleistung P_{implement,limit} für die angetriebene Achse des Arbeitsgerätes ermittelt werden, d.h auch in diesem Fall ist eine Leistungsbegrenzung vorgesehen.

Dadurch, dass die Geländebeschaffenheit berücksichtigt werden kann, insbesondere die Hangneigung, kann beispielsweise zum Anfahren am Berg in Vorwärtsfahrtrichtung bergab, die an die angetriebene Achse des Arbeitsgerätes übertragene Antriebsleistung derart eingestellt werden, dass sich relativ zum Schlupf der Räder 111ₗ und 111ᵣ der Hinterachse 110 gegenüber dem Untergrund und relativ zum Schlupf der Räder 121ₗ und 121ᵣ der Vorderachse 120 gegenüber dem Untergrund ein voreilend negativer Schlupf der Räder, d.h. ein Nachlauf gegenüber der Vorderachse 120 und der Hinterachse 110, der antreibbaren Achse des Arbeitsgerätes gegenüber dem Untergrund einstellt. Dadurch kann ein "Strecken" des Gespanns bewirkt werden und eine bessere Beherrschbarkeit des Gespanns erreicht werden.

Um mit dem Traktor 100 eine besonders gute Traktion zu erreichen, umfasst die Steuerungseinrichtung 20 ferner eine Motorsteuerungseinrichtung 131, mit welcher die vom Verbrennungsmotor 130 an die Hinterachse 110 abgegebene Leistung gezielt eingestellt werden kann, wobei die Motorsteuerungseinrichtung 131 dabei dazu ausgebildet ist, die vom Verbrennungsmotor 130 abgegebene Leistung in Abhängigkeit einer von der Fahrzustandssteuerungseinrichtung 12 erfassten Soll-Drehzahl n_{CE,Ref} und einer begrenzten Steuergröße T_{CE,limit} in Form eines Soll-Drehmomentes einzustellen.

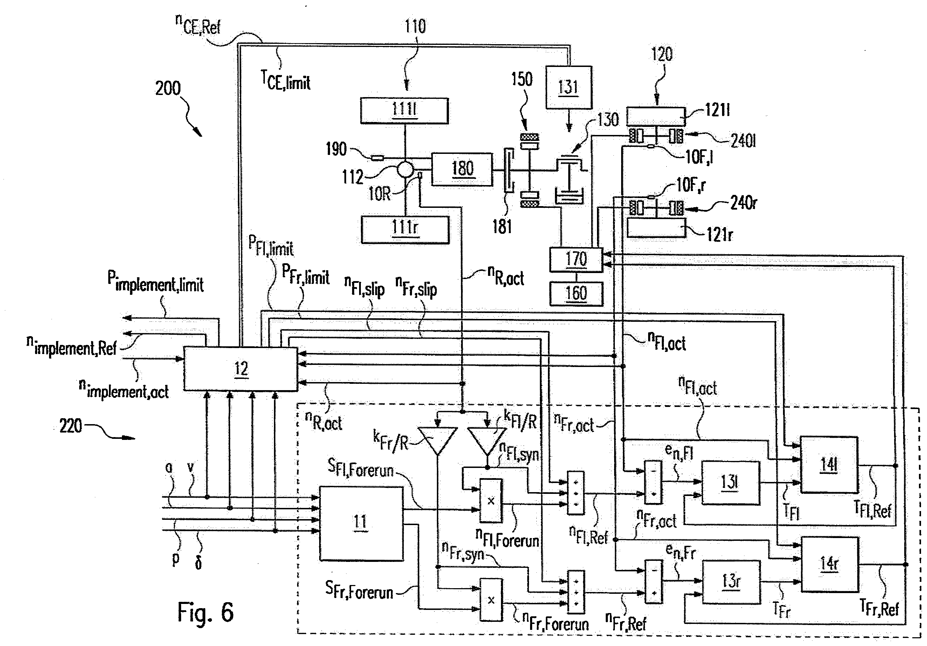

Fig. 6 zeigt das entsprechende, vereinfachte Blockschaltbild zur Steuerung der Raddrehzahlen eines anhand von Fig. 2 beschriebenen erfindungsgemäßen Fahrzeugs 200, bei dem zum Antrieb des linken Vorderrades 121ₗ und zum Antrieb des rechten Vorderrades 121ᵣ der Vorderachse 100 jeweils ein separater Elektromotor 240ₗ bzw. 240ᵣ vorgesehen ist, wobei die beiden Elektromotoren 240ₗ und 240ᵣ jeweils als Radnabenmotoren ausgebildet sind und separat angesteuert werden können.

Dabei wird für jede, als Elektromotor betreibbare elektrische Maschine 240ₗ und 240ᵣ jeweils ein separates Soll-Drehmoment T_{F,Ref} zur Ansteuerung ermittelt. Die Berechnung der Steuergröße T_{F,Ref} erfolgt dabei wie bei dem anhand von Fig. 5 beschriebenen erfindungsgemäßen Verfahren, jedoch jeweils getrennt für das linke Vorderrad 121ₗ sowie das rechte Vorderrad 121ᵣ. Die entsprechenden, dem linken Vorderrad 121ₗ zugeordneten Größen sind entsprechend mit ₗ indiziert, die dem rechten Vorderrad 121ᵣ zugeordneten Größen sind entsprechend mit ᵣ indiziert, wobei die entsprechenden Soll-Drehzahl n_{Fl,Ref} und n_{Fr},_{Ref} des linken Vorderrades 121ₗ und des rechten Vorderrades 121ᵣ jeweils in Abhängigkeit einer für das jeweilige Rad erfassten Ist-Drehzahl n_{Fl,act} bzw. n_{Fr,act} ermittelt werden.

Mit einem erfindungsgemäßen Traktor 200, der zur Durchführung eines anhand von Fig. 6 beschriebenen, erfindungsgemäßen Verfahrens ausgebildet ist, kann beispielsweise bei einer Hangschrägfahrt oder einer Hangquerfahrt in Vorwärtsfahrtrichtung, der Differenz-Drehzahl-Anteil s_{Fr,Forerun} zur Ermittlung der Soll-Drehzahl n_{Fr},_{Ref} des talseitigen Vorderrades, beispielsweise des rechten Vorderrades 121ᵣ, größer gewählt werden als der Differenz-Drehzahl-Anteil s_{Fl,Forerun} zur Ermittlung der Soll-Drehzahl n_{Fl,Ref} des linken, bergseitigen Vorderrades 121ₗ, wodurch einem durch die Hangabtriebskraft verursachten Abdriften des Traktors 200 hangabwärts entgegen gewirkt werden kann.

Fig. 7 zeigt das entsprechende, vereinfachte Blockschaltbild zur Steuerung der Raddrehzahlen eines anhand von Fig. 3 beschriebenen erfindungsgemäßen Fahrzeugs 300, bei dem der erste Antriebsmotor zum Antrieb der Hinterachse 110 eine als Elektromotor betreibbare elektrische Maschine 340 ist, für ein weiteres Ausführungsbeispiels eines erfindungsgemäßen Verfahrens, wobei im Unterschied zu den anhand der Fig. 5 und 6 beschriebenen Verfahren bei diesem Ausführungsbeispiel auch eine Soll-Drehzahl n_{R,Ref} für die Räder 111ₗ und 111ᵣ der Hinterachse 110 ermittelt wird und eingestellt werden kann.

Die Ermittlung der Soll-Drehzahl n_{R,Ref} der Hinterachse 110 erfolgt dabei mittels der Steuerungseinrichtung 320, insbesondere mittels der Fahrzustandssteuerungseinrichtung 312, fahrzustandsabhängig in Abhängigkeit der Fahrzustandsgrößen Fahrzeuggeschwindigkeit v, Gaspedalstellung a, Bremsdruck p und Lenkwinkel δ. Selbstverständlich können alternativ oder zusätzlich auch andere Fahrzustandsgrößen oder andere Parameter wie beispielsweise eine vom Fahrer vorgegebene Geländebeschaffenheit, eine Hangneigung oder dergleichen berücksichtigt werden.

Zur Einstellung der gewünschten Soll-Drehzahl n_{R,Ref} an den Rädern 111ₗ und 111ᵣ der Hinterachse wird anschließend aus der ermittelten Soll-Drehzahl n_{R,Ref} für die Hinterachse 110 und der ermittelten Ist-Drehzahl n_{R,act} der Hinterachse 110 mittels eines entsprechenden Geschwindigkeitsreglers 313 zunächst ebenfalls eine erforderliche Steuergröße zur Ansteuerung des Elektromotors 340 ermittelt, wobei es sich in diesem Fall ebenfalls um ein Soll-Drehmoment handelt.

Um zu vermeiden, dass der Elektromotor 340 beim Einstellen der gewünschten Soll-Drehzahl n_{R,Ref} an der Hinterachse 110 in einen kritischen Betriebszustand gelangt und beispielsweise einen zu hohen, die Leistungselektronik 170 des Elektromotors 340 beschädigende Stromaufnahme hat, und um zu vermeiden, dass sich die Traktion der Hinterachse 110 durch Einstellen der gewünschten Soll-Raddrehzahl n_{R,Ref} verschlechtert, ist ebenfalls zusätzlich eine Leistungsbegrenzungseinrichtung 314 vorgesehen, welche die ermittelte Steuergröße zur Ansteuerung des Elektromotors 340 bei Überschreiten eines Steuergrößenschwellenwertes auf eine maximale Steuergröße T_{R,Ref} begrenzt. Beispielsweise wird die ermittelte Steuergröße zur Ansteuerung des Elektromotors 340 begrenzt, wenn das Einstellen der Soll-Drehzahl n_{R,Ref} eine Zunahme der Ist-Drehzahl n_{R,act} erfordert, aber eines der Räder 111ₗ bzw. 111ᵣ der Hinterachse 110 sich bereits an der Haftungsgrenze befindet, so dass eine Zunahme der Radumfangsgeschwindigkeit des betreffenden Rades 111ₗ bzw. 111ᵣ zum Durchdrehen des Rades führen würde.

Die Leistungsbegrenzung der Steuergröße erfolgt bei diesem Ausführungsbeispiel ebenfalls fahrzustandsabhängig. Dazu wird von der Fahrzustandssteuerungseinrichtung 312, ebenfalls in Abhängigkeit der Fahrzustandsgrößen Fahrzeuggeschwindigkeit v, Gaspedalstellung a, Bremsdruck p sowie dem Lenkwinkel δ eine für die jeweilige Fahrsituation maximal zulässige Antriebsleistung P_{R,limit} des Elektromotors 340 bestimmt und an die Leistungsbegrenzungseinrichtung 314 übergeben.

Anhand der von der Steuerungseinrichtung 320 ausgegebenen Steuergröße T_{R,Ref} zur Ansteuerung des Elektromotors 340 kann mittels der Leistungselektronik 170 die gewünschte Antriebsleistung am Elektromotor 340 eingestellt werden, mit welcher sich an den Rädern 111ₗ und 111ᵣ der Hinterachse 110 die gewünschte Soll-Drehzahl n_{R,Ref} einstellt.

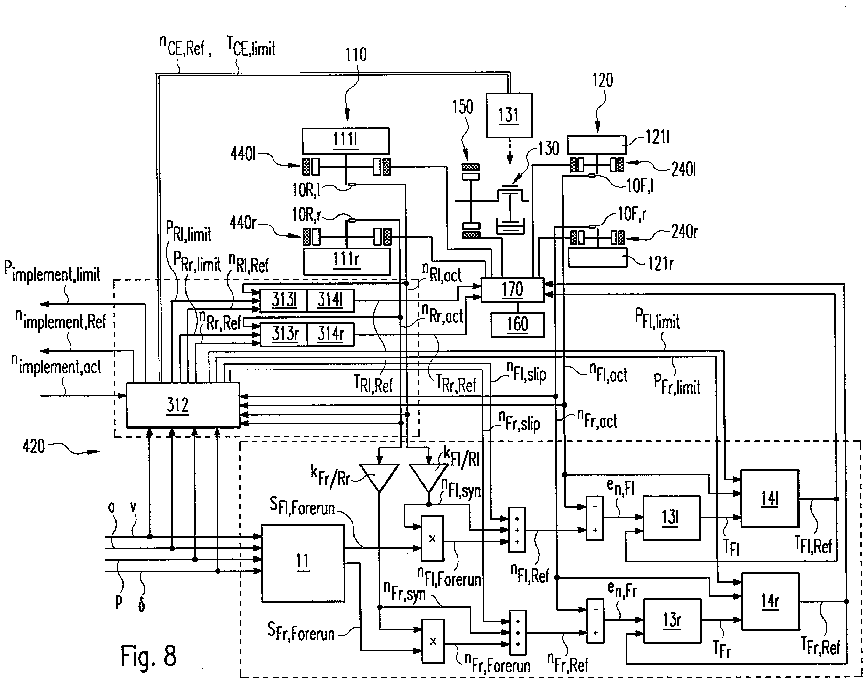

Fig. 8 zeigt das entsprechende, vereinfachte Blockschaltbild zur Steuerung der Raddrehzahlen eines anhand von Fig. 4 beschriebenen, erfindungsgemäßen Fahrzeugs 400, bei dem zum Antrieb des linken Hinterrades 111ₗ und zum Antrieb des rechten Hinterrades 111ᵣ der Hinterachse 110 jeweils ein separater Elektromotor 440ₗ bzw. 440ᵣ vorgesehen ist, wobei die beiden Elektromotoren 440ₗ und 440ᵣ jeweils als Radnabenmotoren ausgebildet sind und separat angesteuert werden können.

Dabei wird für jede, als Elektromotor betreibbare elektrische Maschine 440ₗ und 440ᵣ mittels der Steuerungseinrichtung 420 jeweils ein separates Soll-Drehmoment T_{Rl,Ref} bzw. T_{Rr,Ref} zur Ansteuerung ermittelt. Die Berechnung der Steuergröße T_{Rl,Ref} bzw. T_{Rr,Ref} erfolgt dabei wie bei dem anhand von Fig. 7 beschriebenen Verfahren, jedoch jeweils getrennt für das linke Hinterrad 111ₗ sowie das rechte Hinterrad 111ᵣ.

Die entsprechenden, dem linken Hinterrad 111ₗ zugeordneten Größen sind entsprechend mit I indiziert, die dem rechten Hinterrad 111ᵣ zugeordneten Größen sind entsprechend mit r indiziert, wobei die entsprechenden Soll-Drehzahlen n_{Rl,Ref} und n_{Rr,Ref} des linken Hinterrades 111ₗ und des rechten Hinterrades 111ᵣ jeweils in Abhängigkeit einer für das jeweilige Rad erfassten Ist-Drehzahl n_{Rl,act} bzw. n_{Rr,act} ermittelt werden.

Durch die radweise Ermittlung der Ist-Drehzahlen n_{Rl,act} bzw. n_{Rr,act} der Hinterräder 111ₗ und 111ᵣ der Hinterachse 110 können ferner die Synchron-Soll-Drehzahlen n_{Fl,syn} und n_{Fr,syn} des linken Vorderrades 121ₗ und des rechten Vorderrades 121ᵣ jeweils in Abhängigkeit der ermittelten Ist-Drehzahlen n_{Rl,act} bzw. n_{Rr,act} des linken Hinterrades 111ₗ bzw. des rechten Hinterrades 111ᵣ ermittelt werden.

Dabei wird die Synchron-Soll-Drehzahl n_{Fl,syn} des linken Vorderrades 121ₗ ermittelt, indem die aktuelle Ist-Drehzahl n_{Rl,act} des linken Hinterrades 111ₗ mit dem in der Steuerungseinrichtung 420 hinterlegten Synchron-Korrekturfaktor k_{Fl/Rl} für das linke Vorderrad 121ₗ multipliziert wird, während die Synchron-Soll-Drehzahl n_{Fr,syn} des rechten Vorderrades 121ᵣ ermittelt wird, indem die aktuelle Ist-Drehzahl n_{Rr,act} des rechten Hinterrades 111ᵣ mit dem Synchron-Korrekturfaktor k_{Fr/Rr} für das rechte Vorderrad 121ᵣ multipliziert wird.

Dabei werden die Synchron-Korrekturfaktoren k_{Fr/Rr} und k_{Fl/Rl} analog zu dem anhand von Fig. 5 beschriebenen Verfahren jeweils ermittelt, indem in regelmäßigen Abständen während einer Fahrt auf festem Untergrund die aktuellen Ist-Drehzahlen n_{Rl,act} und n_{Rr,act} des linken Hinterrades 111ₗ und des rechten Hinterrades 111ᵣ und die aktuellen Ist-Drehzahlen n_{Fl,act} und n_{Fr,act} des linken Vorderrades 121ₗ und des rechten Vorderrades 121ᵣ gleichzeitig erfasst werden und anschließend jeweils der Quotient aus der erfassten Ist-Drehzahl n_{Fl,act} bzw. n_{Fr,act} des linken Vorderrades 121ₗ bzw. des rechten Vorderrades 121ᵣ und der erfassten Ist-Drehzahl n_{Rl,act} bzw. n_{Rr,act} des linken Hinterrades 111ₗ bzw. des rechten Hinterrades 111ᵣ berechnet wird, wobei das Ergebnis dieser Quotienten jeweils der Wert des Synchron-Korrekturfaktors k_{Fl/Rl} bzw. k_{Fr/Rr} ist, der als Parameter in der Steuerungseinrichtung 420 hinterlegt ist.

### Bezugszeichenliste

Die Indizes der einzelnen Größen haben jeweils die folgende Bedeutung:
- l: links
- r: rechts
- R: Hinterachse ("rear")
- F: Vorderachse ("front")
- act: aktuelle Größe bzw. Ist-Größe
- Ref: Soll-Größe
- syn: die Synchron-Soll-Drehzahl betreffend
- Forerun: den Differenz-Drehzahl-Anteil betreffend
- slip: den Schlupf-Drehzahl-Anteil betreffend
- implement: ein mit dem Traktor gekoppeltes Arbeitsgerät betreffend
- limit: Grenzwert
- CE: den Verbrennnungsmotor betreffend

Für die Bezugszeichen gilt folgende Zuordnung:
- 10F: Raddrehzahlsensorik zur Erfassung der Ist-Drehzahl der Vorderachse
- 10FI: Raddrehzahlsensorik zur Erfassung der Ist-Drehzahl des linken Vorderrades
- 10Fr: Raddrehzahlsensorik zur Erfassung der Ist-Drehzahl des rechten Vorderrades
- 10R: Raddrehzahlsensorik zur Erfassung der Ist-Drehzahl der Hinterachse
- 10RI: Raddrehzahlsensorik zur Erfassung der Ist-Drehzahl des linken Hinterrades
- 10Rr: Raddrehzahlsensorik zur Erfassung der Ist-Drehzahl des rechten Hinterrades
- 11: Kennfeld zur Ermittlung des Differenz-Korrekturfaktor
- 12,312: Fahrzustandssteuerungseinrichtung
- 13, 13l, 13r 313,313l, 313r: Geschwindigkeitsregler
- 14, 14l, 14r 314, 314l, 314r: Leistungsbegrenzungseinrichtung
- 20, 220, 320 420: Steuerungseinrichtung
- 100, 200, 300: erfindungsgemäßer Traktor
- 400 110: Hinterachse
- 111l: linkes Hinterrad
- 111r: rechtes Hinterrad
- 112: Hinterachsdifferential
- 120: Vorderachse
- 121l: linkes Vorderrad
- 121r: rechtes Vorderrad
- 122: Vorderachsdifferential
- 130: Verbrennungsmotor
- 140: Elektromotor
- 150: als Generator und Elektromotor betreibbare elektrische Maschine
- 160: Energiespeicher
- 170: Leistungselektronik
- 180: Getriebe
- 181: Kupplung
- 190: Nebenabtrieb, sogenannte "Zapfwelle"
- 240l: elektrischer Radnabenmotor zum Antrieb des linken Vorderrades
- 240r: elektrischer Radnabenmotor zum Antrieb des rechten Vorderrades
- 340: Elektromotor
- 440l: elektrischer Radnabenmotor zum Antrieb des linken Hinterrades
- 440r: elektrischer Radnabenmotor zum Antrieb des rechten Hinterrades
- a: Gaspedalstellung
- δ: Lenkwinkel
- e_{n,F}: Regelabweichung zwischen Ist- und Soll-Drehzahl der Vorderachse
- e_{n,Fl}: Regelabweichung zwischen Ist- und Soll-Drehzahl des linken Vorderrades
- e_{n,Fr}: Regelabweichung zwischen Ist- und Soll-Drehzahl des rechten Vorderrades
- k_{F/R}: Synchron-Korrekturfaktor für die Vorderachse
- k_{Fl/R}, k_{Fl/Rl}: Synchron-Korrekturfaktor für das linke Vorderrad
- k_{Fr/R}, k_{Fr/Rr}: Synchron-Korrekturfaktor für das rechte Vorderrad
- n_{F,act}: Ist-Drehzahl der Vorderachse
- n_{Fl,act}: Ist-Drehzahl des linken Vorderrades
- n_{Fr,act}: Ist-Drehzahl des rechten Vorderrades
- n_{R,act}: Ist-Drehzahl der Hinterachse
- n_{Rl,act}: Ist-Drehzahl des linken Hinterrades
- n_{Rr,act}: Ist-Drehzahl des rechten Hinterrades
- n_{F,syn}: Synchron-Soll-Drehzahl der Vorderachse
- n_{Fl,Syn}: Synchron-Soll-Drehzahl des linken Vorderrades
- n_{Fr,syn}: Synchron-Soll-Drehzahl des rechten Vorderrades
- n_{F,Forerun}: Differenz-Drehzahl-Anteil der Vordreachse
- n_{Fl,Forerun}: Differenz-Drehzahl-Anteil des linken Vorderrades
- n_{Fr,Forerun}: Differenz-Drehzahl-Anteil des rechten Vorderrades
- n_{F,slip}: Schlupf-Drehzahl-Anteil der Vorderachse
- n_{Fl,slip}: Schlupf-Drehzahl-Anteil des linken Vorderrades
- n_{Fr,slip}: Schlupf-Drehzahl-Anteil des rechten Vorderrades
- n_{F,Ref}: Soll-Drehzahl der Vorderachse
- n_{Fl,Ref}: Soll-Drehzahl des linken Vorderrades
- n_{Fr},_{Ref}: Soll-Drehzahl des rechten Vorderrades
- n_{implement,act}: Ist-Drehzahl der angetriebenen Achse eines mit dem Traktor gekoppelten Arbeitsgerätes
- n_{implement,Ref}: Soll-Drehzahl der angetriebenen Achse eines mit dem Traktor gekoppelten Arbeitsgerätes
- n_{CE,Ref}: zur Einstellung einer gewünschten Soll-Drehzahl an der Hinterachse erforderliche Soll-Drehzahl des Verbrennungsmotors
- n_{R,Ref}: Soll-Drehzahl der Hinterachse
- n_{Rl,Ref}: Soll-Drehzahl des linken Hinterrades
- n_{Rr,Ref}: Soll-Drehzahl des rechten Hinterrades
- p: Bremsdruck
- P_{F,limit}: für die aktuelle Fahrsituation maximal zulässige Leistung des zum Antrieb der Vorderachse vorgesehenen Elektromotors
- P_{Fl,limit}: für die aktuelle Fahrsituation maximal zulässige Leistung des zum Antrieb des linken Vorderrades vorgesehenen Radnabenmotors
- P_{Fr,limit}: für die aktuelle Fahrsituation maximal zulässige Leistung des zum Antrieb des rechten Vorderrades vorgesehenen Radnabenmotors
- P_{R,limit}: für die aktuelle Fahrsituation maximal zulässige Leistung des zum Antrieb der Hinterachse vorgesehenen Elektromotors
- P_{Rl,limit}: für die aktuelle Fahrsituation maximal zulässige Leistung des zum Antrieb des linken Hinterrades vorgesehenen Radnabenmotors
- P_{Rr,limit}: für die aktuelle Fahrsituation maximal zulässige Leistung des zum Antrieb des rechten Hinterrades vorgesehenen Radnabenmotors
- P_{implement,limit}: für die aktuelle Fahrsituation maximal zulässige Leistung des zum Antrieb der Achse eines mit dem Traktor gekoppelten Anbaugerätes vorgesehenen Antriebsmotors
- S_{F,Forerun}: Differenz-Korrekturfaktor für die Vorderachse
- S_{Fl,Forerun}: Differenz-Korrekturfaktor für das linke Vorderrad
- S_{Fr,Forerun}: Differenz-Korrekturfaktor für das rechte Vorderrad
- T_{F}: rechnerisch ermittelte Steuergröße Soll-Drehmoment des zum Antrieb der Vorderachse vorgesehenen Elektromotors
- T_{Fl}: rechnerisch ermittelte Steuergröße Soll-Drehmoment des zum Antrieb des linken Vorderrades vorgesehenen Radnabenmotors
- T_{Fr}: rechnerisch ermittelte Steuergröße Soll-Drehmoment des zum Antrieb des rechten Vorderrades vorgesehenen Radnabenmotors
- T_{F,Ref}: für die aktuelle Fahrsituation begrenzte Steuergröße Soll-Drehmoment des zum Antrieb der Vorderachse vorgesehenen Elektromotors
- T_{Fl,Ref}: für die aktuelle Fahrsituation begrenzte Steuergröße Soll-Drehmoment des zum Antrieb des linken Vorderrades vorgesehenen Radnabenmotors
- T_{Fr,Ref}: für die aktuelle Fahrsituation begrenzte Steuergröße Soll-Drehmoment des zum Antrieb des rechten Vorderrades vorgesehenen Radnabenmotors
- T_{R,Ref}: für die aktuelle Fahrsituation begrenzte Steuergröße Soll-Drehmoment des zum Antrieb der Hinterachse vorgesehenen Elektromotors
- T_{Rl,Ref}: für die aktuelle Fahrsituation begrenzte Steuergröße Soll-Drehmoment des zum Antrieb des linken Hinterrades vorgesehenen Radnabenmotors
- T_{Rr,Ref}: für die aktuelle Fahrsituation begrenzte Steuergröße Soll-Drehmoment des zum Antrieb des rechten Hinterrades vorgesehenen Radnabenmotors
- v: Fahrzeuggeschwindigkeit

## Patentansprüche

1. Verfahren zur Steuerung oder Regelung einer Raddrehzahl (n_{F,Ref}) wenigstens eines Rades (111ₗ, 111 ᵣ; 121ₗ, 121ᵣ) einer antreibbaren Achse (110, 120) eines zweispurigen Fahrzeugs (100, 200, 300, 400) mit zwei antreibbaren Achsen (110, 120), insbesondere zur Steuerung einer Raddrehzahl (n_{F,Ref}) wenigstens eines Rades (111ₗ, 111ᵣ; 121ₗ, 121ᵣ) einer antreibbaren Achse (110, 120) eines als Traktor oder als selbstfahrende Arbeitsmaschine ausgebildeten Fahrzeugs (100, 200, 300, 400) mit zwei antreibbaren Achsen (110, 120), wobei das Fahrzeug (100, 200, 300, 400)
- eine erste, antreibbare Achse (110) mit wenigstens zwei Rädern (111ₗ, 111ᵣ),
- eine zweite, antreibbare Achse (120) mit wenigstens zwei Rädern (121ₗ, 121ᵣ),
- einen ersten Antriebsmotor (130, 340, 440l, 440r),
- wenigstens einen zweiten Antriebsmotor (140, 240ₗ, 240ᵣ),
- eine Einrichtung zur Erfassung von Fahrzustandsgrößen (12, 312) zur Ermittlung eines Fahrzustandes des Fahrzeugs und
- eine Steuerungseinrichtung (20, 220, 320, 420) aufweist,
- wobei der erste Antriebsmotor (130, 340, 440l, 440r) zum Antrieb wenigstens eines Rades (111ₗ, 111ᵣ) der ersten Achse (110) vorgesehen ist,
- wobei der zweite Antriebsmotor (140, 240ₗ, 240ᵣ) zum Antrieb wenigstens eines Rades (121ₗ, 121ᵣ) der zweiten Achse (120) vorgesehen ist,
- wobei die Einrichtung zur Erfassung von Fahrzustandsgrößen (12, 312) wenigstens dazu ausgebildet ist, eine Ist-Drehzahl (n_{R,act}) der ersten Achse (110) zu erfassen, und
- wobei die Steuerungseinrichtung (20, 220, 320, 420) dazu ausgebildet ist, wenigstens in Abhängigkeit von der ermittelten Ist-Drehzahl (n_{R,act}) der ersten Achse (110) eine Soll-Drehzahl (n_{F,Ref}) für das wenigstens eine Rad (121ₗ, 121ᵣ) der zweiten Achse (120) zu ermitteln und wenigstens den zweiten Antriebsmotor (140, 240ₗ, 240ᵣ) derart anzusteuern, dass sich an dem wenigstens einen Rad (121ₗ, 121ᵣ) der zweiten Achse (120) die gewünschte Soll-Drehzahl (n_{F,Ref}) einstellt,
mit den Schritten:
- Ermitteln einer Ist-Drehzahl (n_{R,act}) der ersten Achse (110),
- Ermitteln der Soll-Drehzahl (n_{F,Ref}) für das wenigstens eine Rad (121ₗ, 121ᵣ) der zweiten Achse (120) wenigstens in Abhängigkeit von der Ist-Drehzahl (n_{R,act}) der ersten Achse (110),
- Ansteuern wenigstens des zweiten Antriebsmotors (140, 240ₗ, 240ᵣ) derart, dass sich die ermittelte Soll-Drehzahl (n_{F,Ref}) an dem wenigstens einem Rad (121ₗ, 121ᵣ) der zweiten Achse (120) einstellt,
wobei zur Ermittlung der Soll-Drehzahl (n_{F,Ref}) eine Synchron-Soll-Drehzahl (n_{F,Syn}) in Abhängigkeit von der Ist-Drehzahl (n_{R,act}) der ersten Achse ermittelt wird und in Abhängigkeit von der ermittelten Synchron-Soll-Drehzahl (n_{F,syn}) die Soll-Drehzahl (n_{F,Ref}) ermittelt wird, wobei die Synchron-Soll-Drehzahl (n_{F,syn}) die Soll-Drehzahl (n_{F,Ref}) ist, bei der sich an dem wenigstens einen Rad (121ₗ, 121ᵣ) der zweiten Achse (120) die gleiche Radumfangsgeschwindigkeit einstellt wie an den Rädern (111ₗ, 111ᵣ) der ersten Achse (110).

2. Verfahren nach Anspruch 1, **dadurch gekennzeichnet, dass** die Synchron-Soll-Drehzahl (n_{F,syn}) ermittelt wird, indem die Ist-Drehzahl (n_{R,act}) der ersten Achse (110) mit einem vordefinierten Synchron-Korrekturfaktor (k_{F/R}) beaufschlagt wird.

3. Verfahren nach Anspruch 1 oder 2, **dadurch gekennzeichnet, dass** die Soll-Drehzahl (n_{F,Ref}) zusätzlich in Abhängigkeit von einem Differenz-Drehzahl-Anteil (n_{F,Forerun}) ermittelt wird, welcher die Differenz der sich einzustellenden Radumfangsgeschwindigkeit wenigstens eines Rades (121ₗ, 121ᵣ) der zweiten Achse (120) zur Radumfangsgeschwindigkeit der Räder (111ₗ, 111ᵣ) der ersten Achse (110) definiert, wobei der Differenz-Drehzahl-Anteil (n_{F,Forerun}) vorzugsweise bestimmt wird, indem die ermittelte Synchron-Soll-Drehzahl (n_{F,syn}) mit einem vordefinierten Differenz-Korrekturfaktor (s_{F,Forerun}) beaufschlagt wird.

4. Verfahren nach einem der vorgenannten Ansprüche, insbesondere nach Anspruch 3, wobei die Einrichtung zur Erfassung von Fahrzustandsgrößen dazu ausgebildet ist, neben der Ist-Drehzahl (n_{R,act}) der ersten Achse (110) wenigstens eine weitere Fahrzustandsgröße zu erfassen,
**dadurch gekennzeichnet, dass** wenigstens eine weitere Fahrzustandsgröße erfasst wird und der Differenz-Korrekturfaktor (s_{F,Forerun}) in Abhängigkeit von wenigstens einer weiteren, erfassten Fahrzustandsgröße mittels eines vordefinierten Kennfeldes und/oder durch eine vordefinierte, von wenigstens einer weiteren, erfassten Fahrzustandsgröße abhängigen, mathematischen Funktion bestimmt wird, vorzugsweise in Abhängigkeit von einer Fahrzeuggeschwindigkeit (v) und/oder einer Gaspedalstellung (a) und/oder einem Bremsdruck (p) und/oder einem Lenkradwinkel (δ) und/oder einer Fahrzeugneigung und/oder einer Hangneigung und/oder einer von einem Fahrer eingegebenen Geländebeschaffenheit und/oder eines vom Fahrer eingegebenen gewünschten Fahrweges.

5. Verfahren nach einem der vorgenannten Ansprüche, **dadurch gekennzeichnet, dass** die Soll-Drehzahl (n_{F,Ref}) zusätzlich in Abhängigkeit von einem vordefinierten Schlupf-Drehzahl-Anteil (n_{F,slip}) ermittelt wird, wobei der Schlupf-Drehzahl-Anteil (n_{F,slip}) dazu dient, einen gewünschten Schlupf wenigstens eines Rades (121ₗ, 121ᵣ) der zweiten Achse (120) gegenüber dem Untergrund einzustellen, insbesondere einen Schlupf, mit dem eine möglichst optimale Traktion erreichbar ist, wobei der Schlupf-Drehzahl-Anteil (n_{F,slip}) vorzugsweise in Abhängigkeit von der Ist-Drehzahl (n_{R,act}) der ersten Achse (110) und/oder in Abhängigkeit von wenigstens einer weiteren, von der Einrichtung zur Erfassung eines Fahrzustandes erfassten Fahrzustandsgröße bestimmt wird, insbesondere in Abhängigkeit von einer Fahrzeuggeschwindigkeit (v) und/oder einer Gaspedalstellung (a) und/oder einem Bremsdruck (p) und/oder einem Lenkradwinkel (δ) und/oder einer Fahrzeugneigung und/oder einer Hangneigung und/oder einer von einem Fahrer eingegebenen Geländebeschaffenheit und/oder eines vom Fahrer eingegebenen gewünschten Fahrweges.

6. Verfahren nach einem der vorgenannten Ansprüche, **dadurch gekennzeichnet, dass** die Soll-Drehzahl (n_{F,Ref}) in Abhängigkeit von der Summe aus der Synchron-Soll-Drehzahl (n_{F,syn}), dem Differenz-Drehzahl-Anteil (n_{F,Forerun}) und dem Schlupf-Drehzahl-Anteil (n_{F,slip}) ermittelt wird, insbesondere durch die Summe aus der Synchron-Soll-Drehzahl (n_{F,syn}), dem Differenz-Drehzahl-Anteil (n_{F,Forerun}) und dem Schlupf-Drehzahl-Anteil (n_{F,slip}).

7. Verfahren nach einem der vorgenannten Ansprüche, wobei das Fahrzeug (100, 200, 300, 400) mit einem Arbeitsgerät gekoppelt ist und mit dem Arbeitsgerät ein Gespann bildet, wobei das Fahrzeug (100, 200, 300, 400) ein Zugfahrzeug des Gespanns bildet, wobei das Arbeitsgerät wenigstens eine antreibbare Achse aufweist, und wobei die Steuerungseinrichtung (20, 220, 320, 420) des Fahrzeugs zur Einstellung einer auf die antreibbare Achse übertragbaren Antriebsleistung ausgebildet ist,
**dadurch gekennzeichnet, dass** die auf die angetriebene Achse des Arbeitsgerätes übertragene Antriebsleistung derart eingestellt wird, dass sich in Abhängigkeit von einem erfassten Fahrzustand ein gewünschter Schlupf an den Rädern der angetriebenen Achse des Arbeitsgerätes gegenüber dem Untergrund einstellt, insbesondere ein Schlupf, mit dem eine möglichst optimale Traktion des Gespanns erreichbar ist.

8. Verfahren nach Anspruch 7, **dadurch gekennzeichnet, dass** zum Anfahren am Berg in Vorwärtsfahrtrichtung bergab, um ein Strecken des Gespanns beim Anfahren zu bewirken, die auf die angetriebene Achse des Arbeitsgerätes übertragene Antriebsleistung derart eingestellt wird, dass sich relativ zum Schlupf der Räder (111ₗ, 111ᵣ) der ersten Achse (110) gegenüber dem Untergrund und relativ zum Schlupf der Räder (121ₗ, 121ᵣ) der zweiten Achse (120) gegenüber dem Untergrund ein voreilend negativer Schlupf der Räder der angetriebenen Achse des Arbeitsgerätes gegenüber dem Untergrund einstellt.

9. Verfahren nach Anspruch 7 oder 8, **dadurch gekennzeichnet, dass** zum Anfahren am Berg in Vorwärtsfahrtrichtung bergauf, um ein Stauchen des Gespanns beim Anfahren zu bewirken, die auf die angetriebene Achse des Arbeitsgerätes übertragene Antriebsleistung derart eingestellt wird, dass sich relativ zum Schlupf der Räder (111ₗ, 111ᵣ) der ersten Achse (110) gegenüber dem Untergrund und relativ zum Schlupf der Räder (121ₗ, 121ᵣ) der zweiten Achse (120) gegenüber dem Untergrund ein voreilend positiver Schlupf der Räder der angetriebenen Achse des Arbeitsgerätes gegenüber dem Untergrund einstellt.

10. Verfahren nach einem der vorgenannten Ansprüche, wobei das Fahrzeug (200, 400) zusätzlich einen dritten Antriebsmotor (240ᵣ) aufweist, der ebenfalls dazu vorgesehen ist, wenigstens ein Rad (121ᵣ) der zweiten Achse (120) anzutreiben, wobei der zweite Antriebsmotor (240ₗ) zum Antrieb eines linken Rades (121ₗ) der zweiten Achse (120) vorgesehen ist und der dritte Antriebsmotor (240ᵣ) zum Antrieb eines rechten Rades (121ᵣ) der zweiten Achse (120),
**dadurch gekennzeichnet, dass** die Steuerungseinrichtung (220, 420) dazu ausgebildet ist, wenigstens in Abhängigkeit von der ermittelten Ist-Drehzahl (n_{R,act}) der ersten Achse (110) eine Soll-Drehzahl (n_{Fl,Ref}) des linken Rades (121ₗ) der zweiten Achse (120) und eine Soll-Drehzahl (n_{Fr,Ref}) des rechten Rades (121ᵣ) zu ermitteln und wenigstens die zum Antrieb der zweiten Achse (120) vorgesehenen, zweiten (240ₗ) und dritten Antriebsmotoren (240ᵣ) derart anzusteuern, dass sich jeweils am linken Rad (121ₗ) und am rechten Rad (121ᵣ) der zweiten Achse (120) die gewünschte Soll-Drehzahl (n_{Fl,Ref}, n_{Fr,Ref}) einstellt, mit den Schritten:
- Ermitteln einer Ist-Drehzahl (n_{R,act}) der ersten Achse (110),
- Ermitteln der Soll-Drehzahlen (n_{Fl,Ref}, n_{Fr,Ref}) für das linke Rad (121ₗ) der zweiten Achse (120) und für das rechte Rad (121ᵣ) der zweiten Achse (120) wenigstens in Abhängigkeit von der Ist-Drehzahl (n_{R,act}) der ersten Achse (110),
- Ansteuern des zweiten Antriebsmotors (240ₗ) und des dritten Antriebsmotors (240ᵣ) derart, dass sich die ermittelte Soll-Drehzahl (n_{Fl,Ref}, n_{Fr,Ref}) am linken Rad (121ₗ) und am rechten Rad (121ᵣ) der zweiten Achse (120) einstellt.

11. Verfahren nach Anspruch 10, insbesondere für einen Fahrbetrieb des Fahrzeugs (200, 400) bei einer Hangquerfahrt, wobei die zweite Achse (120) die Vorderachse des Fahrzeugs (200, 400) bildet, **dadurch gekennzeichnet, dass** der Differenz-Drehzahl-Anteil (n_{Fl, Forerun}; n_{Fr,Forerun}) zur Ermittlung der Soll-Drehzahl (n_{Fl,Ref}, n_{Fr,Ref}) des talseitigen Vorderrades (121ₗ; 121ᵣ) größer ist als der Differenz-Drehzahl-Anteil (n_{Fl, Forerun}; n_{Fr,Forerun}) zur Ermittlung der Soll-Drehzahl (n_{Fl,Ref}, n_{Fr,Ref}) des bergseitigen Vorderrades (121ₗ; 121ᵣ), um einem durch die Hangabtriebskraft verursachten Abdriften des Fahrzeugs (200, 400) entgegenzuwirken.

12. Verfahren nach Anspruch 11, insbesondere für einen autonomen Fahrbetrieb des Fahrzeugs (200, 400) bei einer Hangschrägfahrt oder einer Hangquerfahrt, wobei das Fahrzeug (200, 400) für einen autonomen Fahrbetrieb ausgebildet ist und einen Lenkaktuator für eine autonome Einstellung eines Radlenkwinkels aufweist, **dadurch gekennzeichnet, dass** der Radlenkwinkel und der jeweilige Differenz-Drehzahl-Anteil (n_{Fl, Forerun}; n_{Fr,Forerun}) der beiden Vorderräder bei einer autonom durchgeführten Fahrt, vorzugsweise bei einer autonom durchgeführten Hangquerfahrt, in Abhängigkeit eines vom Fahrer vorgegebenen Fahrweges und/oder einer erfassten Hangneigung und/oder erfassten Lenkkräften derart eingestellt werden, dass ein Fahrwiderstand des Fahrzeugs (200, 400) reduziert, vorzugsweise minimiert, wird.

13. Zweispuriges Fahrzeug (100, 200, 300, 400) mit wenigstens zwei antreibbaren Achsen (110, 120), insbesondere zweispuriges, als Traktor oder als selbstfahrende Arbeitsmaschine ausgebildetes Fahrzeug (100, 200, 300, 400) mit wenigstens zwei antreibbaren Achsen (110, 120), wobei das Fahrzeug (100, 200, 300, 400)
- eine erste, antreibbare Achse (110) mit wenigstens zwei Rädern (111ₗ, 111ᵣ),
- eine zweite, antreibbare Achse (120) mit wenigstens zwei Rädern (121ₗ, 121ᵣ),
- einen ersten Antriebsmotor (130, 340, 440l, 440r),
- wenigstens einen zweiten Antriebsmotor (140, 240ₗ, 240ᵣ),
- eine Einrichtung zur Erfassung von Fahrzustandsgrößen (12, 312) zur Ermittlung eines Fahrzustandes des Fahrzeugs und
- eine Steuerungseinrichtung (20, 220, 320, 420) aufweist,
- wobei der erste Antriebsmotor (130, 340, 440l, 440r) zum Antrieb wenigstens eines Rades (111ₗ, 111ᵣ) der ersten Achse (110) vorgesehen ist,
- wobei der zweite Antriebsmotor (140, 240ₗ, 240ᵣ) zum Antrieb wenigstens eines Rades (121ₗ, 121ᵣ) der zweiten Achse (120) vorgesehen ist,
- wobei die Einrichtung zur Erfassung von Fahrzustandsgrößen (12, 312) wenigstens dazu ausgebildet ist, eine Ist-Drehzahl (n_{R,act}) der ersten Achse (110) zu erfassen, und
- wobei die Steuerungseinrichtung (20, 220, 320, 420) dazu ausgebildet ist, wenigstens in Abhängigkeit von der ermittelten Ist-Drehzahl (n_{R,act}) der ersten Achse (110) eine Soll-Drehzahl (n_{F,Ref}) für das wenigstens eine Rad (121ₗ, 121ᵣ) der zweiten Achse (120) zu ermitteln und wenigstens den zweiten Antriebsmotor (140, 240ₗ, 240ᵣ) derart anzusteuern, dass sich an dem wenigstens einen Rad (121ₗ, 121ᵣ) der zweiten Achse (120) die gewünschte Soll-Drehzahl (n_{F,Ref}) einstellt,
wobei das Fahrzeug (100, 200, 300, 400) zur Durchführung eines Verfahrens nach einem der Ansprüche 1 bis 12 ausgebildet ist.

14. Zweispuriges Fahrzeug (100, 200) nach Anspruch 13, **dadurch gekennzeichnet, dass** das Fahrzeug (100, 200) ein Hybridfahrzeug ist, wobei der erste Antriebsmotor (130), der zum Antrieb der ersten Achse (110) vorgesehen ist, ein Verbrennungsmotor (130) ist und wobei der zweite Antriebsmotor (140, 240ₗ, 240ᵣ), der zumindest zum Antrieb eines Rades (121ₗ, 121ᵣ) der zweiten Achse (120) vorgesehen ist, eine als Elektromotor betreibbare elektrische Maschine (140, 240ₗ, 240ᵣ) ist, wobei das Fahrzeug (100, 200) vorzugsweise außerdem eine als Generator betreibbare elektrische Maschine (150) und einen elektrischen Energiespeicher (160) aufweist, wobei die als Generator betreibbare elektrische Maschine (150) mittels des Verbrennungsmotors (130) antreibbar ist und dazu ausgebildet ist, elektrische Energie an den elektrischen Energiespeicher (160) und/oder an die als Elektromotor betreibbare elektrische Maschine (140, 240ₗ, 240ᵣ) abzugeben, und wobei die als Elektromotor betreibbare elektrische Maschine (140, 240ₗ, 240ᵣ) mittels der vom Generator (150) und/oder der vom elektrischen Energiespeicher (160) bereitgestellten elektrischen Energie antreibbar ist.

15. Zweispuriges Fahrzeug (100, 200) nach Anspruch 13 oder 14, **dadurch gekennzeichnet, dass** das Fahrzeug (100, 200) in einem Leistungszweig vom ersten Antriebsmotor (130) zur ersten Achse (110) ein Getriebe (180) aufweist, wobei die als Generator betreibbare elektrische Maschine (150) in diesem Leistungszweig zwischen dem ersten Antriebsmotor (130) und dem Getriebe (180) angeordnet ist.

16. Zweispuriges Fahrzeug (200, 400) nach einem der Ansprüche 13 bis 15, **dadurch gekennzeichnet, dass** das Fahrzeug (200, 400) außerdem einen dritten Antriebsmotor (240ᵣ) aufweist, wobei der dritte Antriebsmotor (240ᵣ) ebenfalls dazu vorgesehen ist, die zweite Achse (120) zumindest teilweise anzutreiben, wobei vorzugsweise der zweite Antriebsmotor (240ₗ) zum Antrieb eines linken Rades (121ₗ) der zweiten Achse (120) vorgesehen ist und der dritte Antriebsmotor (240ᵣ) zum Antrieb eines rechten Rades (121ᵣ) der zweiten Achse (120), wobei die Steuerungseinrichtung (220, 420) dazu ausgebildet ist, wenigstens in Abhängigkeit von der ermittelten Ist-Drehzahl (n_{R,act}) der ersten Achse (110) eine Soll-Drehzahl (n_{Fl,Ref}) des linken Rades (121ₗ) der zweiten Achse (120) und eine Soll-Drehzahl (n_{Fr,Ref}) des rechten Rades (121ᵣ) zu ermitteln und wenigstens die zum Antrieb der zweiten Achse (120) vorgesehenen, zweiten und dritten Antriebsmotoren (240ₗ, 240ᵣ) derart anzusteuern, dass sich jeweils am linken Rad (121ₗ) und am rechten Rad (121ᵣ) der zweiten Achse (120) die gewünschte Soll-Drehzahl (n_{Fl,Ref}; n_{Fr,Ref}) einstellt.

## Claims

1. A method for controlling or regulating a wheel speed (n_{F,Ref}) of at least one wheel (111ₗ, 111ᵣ; 121ₗ, 121ᵣ) of a drivable axle (110, 120) of a two-track vehicle (100, 200, 300, 400) with two drivable axles (110, 120), particularly for controlling a wheel speed (n_{F,Ref}) of at least one wheel (111ₗ, 111ᵣ; 121ₗ, 121ᵣ) of a drivable axle (110, 120) of a vehicle (100, 200, 300, 400) with two drivable axles (110, 120) that is embodied as a tractor or as a self-driving work machine, wherein the vehicle (100, 200, 300, 400) has
- a first, drivable axle (110) with at least two wheels (111ₗ, 111ᵣ),
- a second, drivable axle (120) with at least two wheels (121ₗ, 121ᵣ),
- a first drive motor (130, 340, 4401, 440r),
- at least one second drive motor (140, 240ₗ, 240ᵣ),
- a device for detecting driving state variables (12, 312) in order to determine a driving state of the vehicle, and
- a control device (20, 220, 320, 420),
- wherein the first drive motor (130, 340, 4401, 440r) is provided to drive at least one wheel (111ₗ, 111ᵣ) of the first axle (110),
- wherein the second drive motor (140, 240ₗ, 240ᵣ) is provided to drive at least one wheel (121ₗ, 121ᵣ) of the second axle (120),
- wherein the device for detecting driving state variables (12, 312) is at least designed to detect an actual speed (n_{R,act}) of the first axle (110), and
- wherein the control device (20, 220, 320, 420) is designed to determine, at least as a function of the detected actual speed (n_{R,act}) of the first axle (110), a target speed (n_{F,Ref}) for the at least one wheel (121ₗ, 121ᵣ) of the second axle (120) and to control at least the second drive motor (140, 240ₗ, 240ᵣ) such that the desired target speed (n_{F,Ref}) is achieved on the at least one wheel (121ₗ, 121ᵣ) of the second axle (120),
with the steps:
- detecting an actual speed (n_{R,act}) of the first axle (110),
- determining the target speed (n_{F,Ref}) for the at least one wheel (121ₗ, 121ᵣ) of the second axle (120) at least as a function of the actual speed (n_{R,act}) of the first axle (110),
- controlling of at least the second drive motor (140, 240ₗ, 240ᵣ) such that the determined target speed (n_{F,Ref}) is achieved on the at least one wheel (121ₗ, 121ᵣ) of the second axle (120),
wherein, in order to determine the target speed (n_{F,Ref}), a synchronous target speed (n_{F,syn}) is determined as a function of the actual speed (n_{R,act}) of the first axle, and the target speed (n_{F,Ref}) is determined as a function of the determined synchronous target speed (n_{F,syn}), with the synchronous target speed (n_{F,syn}) being the target speed (n_{F,Ref}) at which the same wheel circumferential speed is achieved on the at least one wheel (121ₗ, 121ᵣ) of the second axle (120) as on the wheels (111ₗ, 111ᵣ) of the first axle (110).

2. The method as set forth in claim 1, **characterized in that** the synchronous target speed (n_{F,syn}) is determined by applying a predefined synchronous correction factor (k_{F/R}) to the actual speed (n_{R,act}) of the first axle (110).

3. The method as set forth in claim 1 or 2, **characterized in that** the target speed (n_{F,Ref}) is additionally determined as a function of a differential speed ratio (n_{F,Forerun}), which defines the difference between the wheel circumferential speed of at least one wheel (121ₗ, 121ᵣ) of the second axle (120) and the wheel circumferential speed of the wheels (111ₗ, 111ᵣ) of the first axle (110), with the differential speed ratio (n_{F,Forerun}) being preferably determined by applying a predefined differential correction factor (s_{F,Forerun}) to the determined synchronous target speed (n_{F,syn}).

4. The method as set forth in any one of claims, particularly as set forth in claim 3, wherein the device for detecting driving state variables is designed to detect not only the actual speed (n_{R,act}) of the first axle (110), but also an additional driving state variable,
**characterized in that** at least one additional driving state variable is detected, and the differential correction factor (s_{F,Forerun}) is determined as a function of at least one other detected driving state variable by means of a predefined characteristic map and/or through a predefined mathematical function that is dependent on at least one other detected driving state variable, preferably as a function of a vehicle speed (v) and/or a gas pedal position (a) and/or a braking pressure (p) and/or a steering wheel angle (δ) and/or a vehicle inclination and/or a slope gradient and/or a terrain condition input by a driver and/or a desired route input by the driver.

5. The method as set forth in any one of the preceding claims, **characterized in that** the target speed (n_{F,Ref}) is additionally determined as a function of a predefined slip-speed ratio (n_{F,slip}), with the slip-speed ratio (n_{F,slip}) being used to set a desired slip of at least one wheel (121ₗ, 121ᵣ) of the second axle (120) in relation to the driving surface, particularly a slip with which maximally optimal traction can be achieved, with the slip-speed ratio (n_{F,slip}) being preferably determined as a function of the actual speed (n_{R,act}) of the first axle (110) and/or as a function of at least one other driving state variable that is detected by the device for detecting a driving state variable, particularly as a function of a vehicle speed (v) and/or a gas pedal position (a) and/or a braking pressure (p) and/or a steering wheel angle (δ) and/or a vehicle inclination and/or a slope gradient and/or a terrain condition input by a driver and/or a desired route input by the driver.

6. The method as set forth in any one of the preceding claims, **characterized in that** the target speed (n_{F,Ref}) is determined as a function of the sum of the synchronous target speed (n_{F,syn}), the differential speed ratio (n_{F,Forerun}), and the slip-speed ratio (n_{F,slip}), particularly through the sum of the synchronous target speed (n_{F,syn}), the differential speed ratio (n_{F,Forerun}), and the slip-speed ratio (n_{F,slip}).

7. The method as set forth in any one of the preceding claims, wherein the vehicle (100, 200, 300, 400) is coupled with an implement and, together with the implement, forms a pairing, with the tractor (100, 200, 300, 400) forming a tractor vehicle of the pairing, wherein the implement has at least one drivable axle, and wherein the control device (20, 220, 320, 420) of the vehicle is designed to set a drive power that can be transferred to the drivable axle,
**characterized in that** the drive power transferred to the driven axle of the implement is set such that a desired slip is achieved on the wheels of the driven axle of the implement in relation to the driving surface as a function of a detected driving state, particularly a slip with which maximally optimal traction of the pairing can be achieved.

8. The method as set forth in claim 7, **characterized in that** in order to bring about a stretching of the pairing when starting while traveling downhill in the direction of forward travel, the drive power that is transferred to the driven axle of the implement can be set such that a leading negative slip of the wheels of the driven axle of the implement in relation to the driving surface is achieved relative to the slip of the wheels (111ₗ, 111ᵣ) of the first axle (110) in relation to the driving surface and relative to the slip of the wheels (121ₗ, 121ᵣ) of the second axle (120) in relation to the driving surface.

9. The method as set forth in claim 7 or 8, **characterized in that** in order to bring about a compressing of the pairing when starting while traveling uphill in the direction of forward travel, the drive power that is transferred to the driven axle of the implement can be set such that a leading positive slip of the wheels of the driven axle of the implement in relation to the driving surface is achieved relative to the slip of the wheels (111ₗ, 111ᵣ) of the first axle (110) in relation to the driving surface and relative to the slip of the wheels (121ₗ, 121ᵣ) of the second axle (120) in relation to the driving surface.

10. The method as set forth in any one of the preceding claims, wherein the vehicle (200, 400) additionally has a third drive motor (240ᵣ) that is also provided for the purpose of driving at least one wheel (121ᵣ) of the second axle (120), with the second drive motor (240ₗ) being provided to drive a left wheel (121ₗ) of the second axle (120) and the third drive motor (240ᵣ) being provided to drive a right wheel (121ᵣ) of the second axle (120),
**characterized in that** the control device (220, 420) is designed to determine, at least as a function of the detected actual speed (n_{R,act}) of the first axle (110), a target speed (n_{Fl,Re}f) of the left wheel (121ₗ) of the second axle (120) and a target speed (n_{Fr,Ref}) of the right wheel (121ᵣ) and to control at least the second (240ₗ) and third drive motors (240ᵣ) that are provided to drive the second axle (120) such that the desired target speed (n_{Fl,Ref}, n_{Fr,Ref}) is achieved on the left wheel (121ₗ) and on the right wheel (121ᵣ), respectively, with the steps:
- detecting an actual speed (n_{R,act}) of the first axle (110),
- determining the target speed (n_{Fl,Ref}, n_{Fr,Ref}) for the left wheel (121ₗ) of the second axle (120) and for the right wheel (121ᵣ) of the second axle (120) at least as a function of the actual speed (n_{R,ac}t) of the first axle (110),
- controlling the second drive motor (240ₗ) and third drive motor (240ᵣ) such that the determined target speed (n_{Fl,Ref}, n_{Fr,Ref}) is achieved on the left wheel (121ₗ) and on the right wheel (121ᵣ) of the second axle (120).

11. The method as set forth in claim 10, particularly for a drive operation of the vehicle (200, 400) while traveling transversely across a slope, wherein the second axle (120) forms the front axle of the vehicle (200, 400), **characterized in that** the differential speed ratio (n_{Fl, Forerun}; n_{Fr,Forerun}) for determining the target speed (n_{Fl,Ref}, n_{Fr,Ref}) of the downhill-side front wheel (121ₗ; 121ᵣ) is greater than the differential speed ratio (n_{Fl, Forerun}; n_{Fr,Forerun}) for determining the target speed (n_{Fl,Ref}, n_{Fr,Ref}) of the uphill-side front wheel (121ₗ; 121ᵣ) in order to counteract the downward drift of the vehicle (200, 400) caused by the downgrade force.

12. The method as set forth in claim 11, particularly for the autonomous drive operation of the vehicle (200, 400) while traveling transversely across a slope, wherein the vehicle (200, 400) is designed for autonomous drive operation and has a steering actuator for the autonomous adjustment of a wheel steering angle, **characterized in that** the wheel steering angle and the respective differential speed ratio (n_{Fl, Forerun}; n_{Fr,Forerun}) of the two front wheels are set during an autonomously executed trip, preferably while traveling transversely across a slope autonomously, as a function of a detected slope gradient and/or as a function of detected steering forces such that a tractive resistance of the vehicle (200, 400) is reduced, preferably minimized.

13. A two-track vehicle (100, 200, 300, 400) with at least two drivable axles (110, 120), particularly a two-track vehicle (100, 200, 300, 400) that is embodied as a tractor or as a self-driving work machine with at least two drivable axles (110, 120), wherein the vehicle (100, 200, 300, 400) has
- a first, drivable axle (110) with at least two wheels (111ₗ, 111ᵣ),
- a second, drivable axle (120) with at least two wheels (121ₗ, 121ᵣ),
- a first drive motor (130, 340, 440l, 440r),
- at least one second drive motor (140, 240ₗ, 240ᵣ),
- a device for detecting driving state variables (12, 312) in order to determine a driving state of the vehicle, and
- a control device (20, 220, 320, 420),
- wherein the first drive motor (130, 340, 440l, 440r) is provided to drive at least one wheel (111ₗ, 111ᵣ) of the first axle (110),
- wherein the second drive motor (140, 240ₗ, 240ᵣ) is provided to drive at least one wheel (121ₗ, 121ᵣ) of the second axle (120),
- wherein the device for detecting driving state variables (12, 312) is at least designed to detect an actual speed (n_{R,act}) of the first axle (110), and
- wherein the control device (20, 220, 320, 420) is designed to determine, at least as a function of the detected actual speed (n_{R,act}) of the first axle (110), a target speed (n_{F,Ref}) for the at least one wheel (121ₗ, 121ᵣ) of the second axle (120) and to control at least the second drive motor (140, 240ₗ, 240ᵣ) such that the desired target speed (n_{F,Ref}) is achieved on the at least one wheel (121ₗ, 121ᵣ) of the second axle (120), and
wherein the vehicle (100, 200, 300, 400) is designed to execute a method as set forth in any one of claims 1 to 12.

14. The two-track vehicle (100, 200) as set forth in claim 13, **characterized in that** the vehicle (100, 200) is a hybrid vehicle, with the first drive motor (130), which is provided for driving the first axle (110), being a combustion engine (130), and with the second drive motor (140, 240ₗ, 240ᵣ), which is provided at least for driving a wheel (121ₗ, 121ᵣ) of the second axle (120), being an electric machine that can be operated as an electric motor, wherein the vehicle (100, 200) preferably also has an electric machine (150) that can be operated as a generator and an electrical energy store (160), wherein the electric machine (150) that can be operated as a generator can be powered by means of the combustion engine (130) and is designed to output electrical energy to the electrical energy store (160) and/or to the electric machine (140, 240ₗ, 240ᵣ) that can be operated as an electric motor, and wherein the electric machine (140, 240ₗ, 240ᵣ) that can be operated as an electric motor can be powered by means of the electrical energy made available by the generator (150) and/or by the electrical energy store (160).

15. The two-track vehicle (100, 200) as set forth in claim 13 or 14, **characterized in that** the vehicle (100, 200) has a gearbox (180) in a power branch from the first drive motor (130) to the first axle (110), with the electric machine (150) that can be operated as a generator being arranged in this power branch between the first drive motor (130) and the gearbox (180).

16. The two-track vehicle (200, 400) as set forth in any one of claims 13 to 15, **characterized in that** the vehicle (200, 400) also has a third drive motor (240ᵣ), with the third drive motor (240ᵣ) also being provided for the purpose of driving the second axle (120) at least partially, with the second drive motor (240ₗ) being provided to drive a left wheel (121ₗ) of the second axle (120) and the third drive motor (240ᵣ) being provided to drive a right wheel (121ᵣ) of the second axle (120), and with the control device (220, 420) being designed to determine, at least as a function of the detected actual speed (n_{R,act}) of the first axle (110), a target speed (n_{Fl,Re}f) of the left wheel (121ₗ) of the second axle (120) and a target speed (n_{Fr,Ref}) of the right wheel (121ᵣ) and to control at least the second and third drive motors (240ₗ, 240ᵣ) that are provided to drive the second axle (120) such that the desired target speed (n_{Fl,Ref}; n_{Fr,Ref}) is achieved on the left wheel (121ₗ) and on the right wheel (121ᵣ), respectively, of the second axle (120).

## Revendications

1. Procédé destiné à guider ou à réguler une vitesse de rotation de roue (n_{F,Ref}) d'au moins une roue (111ₗ, 111ᵣ ; 121ₗ, 121ᵣ) d'un essieu (110, 120) pouvant être entraîné d'un véhicule (100, 200, 300, 400) à deux voies avec deux essieux (110, 120) pouvant être entraînés, en particulier pour guider une vitesse de rotation de roue (n_{F,Ref}) d'au moins une roue (111ₗ, 111ᵣ ; 121ₗ, 121ᵣ) d'un essieu (110, 120) pouvant être entraîné d'un véhicule (100, 200, 300, 400) conçu en tant que tracteur ou en tant que machine-outil automotrice avec deux essieux (110, 120) pouvant être entraînés, dans lequel le véhicule (100, 200, 300, 400) présente
- un premier essieu (110) pouvant être entraîné avec au moins deux roues (111ₗ, 111ᵣ),
- un second essieu (120) pouvant être entraîné avec au moins deux roues (121ₗ, 121ᵣ),
- un premier moteur d'entraînement (130, 340, 440l, 440ᵣ),
- au moins un deuxième moteur d'entraînement (140, 240ₗ, 240ᵣ) ,
- un équipement de saisie de grandeurs d'état de conduite (12, 312) pour déterminer un état de conduite du véhicule et
- un équipement de guidage (20, 220, 320, 420),
- dans lequel le premier moteur d'entraînement (130, 340, 440l, 440ᵣ)est prévu pour entraîner au moins une roue (111ₗ, 111ᵣ) du premier essieu (110),
- dans lequel le deuxième moteur d'entraînement (140, 240ₗ, 240ᵣ) est prévu pour entraîner au moins une roue (121ₗ, 121ᵣ) du second essieu (120),
- dans lequel l'équipement pour saisir des grandeurs d'état de conduite (12, 312) est conçu au moins pour saisir une vitesse réelle de rotation (n_{R,act}) du premier essieu (110), et
- dans lequel l'équipement de guidage (20, 220, 320, 420) est conçu pour, au moins en fonction de la vitesse réelle de rotation (n_{R,act}) déterminée du premier essieu (110), déterminer une vitesse de consigne de rotation (n_{F,Ref}) pour la au moins une roue (121ₗ, 121ᵣ) du second essieu (120) et piloter au moins le deuxième moteur d'entraînement (140, 240ₗ, 240ᵣ) de telle sorte que la vitesse de consigne de rotation (n_{F,Ref}) souhaitée s'ajuste au niveau de la au moins une roue (121ₗ, 121ᵣ) du second essieu (120),
avec les étapes de :
- détermination d'une vitesse réelle de rotation (n_{R,act}) du premier essieu (110),
- détermination de la vitesse de consigne de rotation (n_{F,Ref}) pour la au moins une roue (121ₗ, 121ᵣ) du second essieu (120) au moins en fonction de la vitesse réelle de rotation (n_{R,act}) du premier essieu (110),
- pilotage au moins du deuxième moteur d'entraînement (140, 240ₗ, 240ᵣ) de telle sorte que la vitesse de consigne de rotation (n_{F,Ref}) déterminée s'ajuste au niveau de la au moins une roue (121ₗ, 121ᵣ) du second essieu (120),
dans lequel, pour déterminer la vitesse de consigne de rotation (n_{F,Ref}), une vitesse de consigne de rotation synchrone (n_{F,syn}) est déterminée en fonction de la vitesse réelle de rotation (n_{R,act}) du premier essieu, et la vitesse de consigne de rotation (n_{F,Ref}) est déterminée en fonction de la vitesse de consigne de rotation synchrone (n_{F,syn}) déterminée, dans lequel la vitesse de consigne de rotation synchrone (n_{F,syn}) est la vitesse de consigne de rotation (n_{F,Ref}), où la même vitesse périphérique des roues s'ajuste au niveau de la au moins une roue (121ₗ, 121ᵣ) du second essieu (120), ainsi qu'au niveau des roues (111ₗ, 111ᵣ) du premier essieu (110).

2. Procédé selon la revendication 1, **caractérisé en ce que** la vitesse de consigne de rotation synchrone (n_{F,syn}) est déterminée **en ce que** la vitesse réelle de rotation (n_{R,act}) du premier essieu (110) est sollicitée avec un facteur de correction synchrone (k_{F/R}) prédéfini.

3. Procédé selon la revendication 1 ou 2, **caractérisé en ce que** la vitesse de consigne de rotation (n_{F,Ref}) est en outre déterminée en fonction d'une proportion de la vitesse de rotation de différence (n_{F,Forerun}), laquelle définit la différence entre la vitesse périphérique des roues destinée à s'ajuster d'au moins une roue (121ₗ, 121ᵣ) du second essieu (120) et la vitesse périphérique des roues des roues (111ₗ, 111ᵣ) du premier essieu (110), dans lequel la vitesse de rotation de différence (n_{F,Forerun}) est de préférence établie **en ce que** la vitesse de consigne de rotation synchrone (n_{F,syn}) déterminée est sollicitée avec un facteur de correction de différence (S_{F,Forerun}) prédéfini.

4. Procédé selon l'une des revendications précédentes, en particulier selon la revendication 3, dans lequel l'équipement de saisie de grandeurs d'état de conduite est conçu pour, en plus de la vitesse réelle de rotation (n_{R,act}) du premier essieu (110), saisir au moins une autre grandeur d'état de conduite,
**caractérisé en ce qu'**au moins une autre grandeur d'état de conduite est saisie et le facteur de correction de différence (S_{F,Forerun}) est établi en fonction d'au moins une autre grandeur d'état de conduite saisie au moyen d'une cartographie prédéfinie et/ou par une fonction mathématique prédéfinie, dépendante d'au moins une autre grandeur d'état de conduite saisie, de préférence en fonction d'une vitesse de véhicule (v) et/ou d'une position d'accélérateur (a) et/ou d'une pression de freinage (p) et/ou d'un angle de rotation du volant (δ) et/ou d'une inclinaison de véhicule et/ou d'une inclinaison de déclivité et/ou d'une nature de terrain fournie par un conducteur et/ou d'un chemin de circulation souhaité fourni par le conducteur.

5. Procédé selon l'une des revendications précédentes, **caractérisé en ce que** la vitesse de consigne de rotation (n_{F,Ref}) est en outre déterminée en fonction d'une proportion de la vitesse de rotation de glissement (n_{F,slip}) prédéfinie, dans lequel la proportion de vitesse de rotation de glissement (n_{F,slip}) sert à ajuster un glissement souhaité d'au moins une roue (121ₗ, 121ᵣ) du second essieu (120) par rapport à un support, en particulier un glissement avec lequel une traction si possible optimale peut être obtenue, dans lequel la proportion de vitesse de rotation de glissement (n_{F,slip}) est établie de préférence en fonction de la vitesse réelle de rotation (n_{R,act}) du premier essieu (110) et/ou en fonction d'au moins une autre grandeur d'état de conduite saisie par l'équipement de saisie d'une grandeur d'état de conduite, en particulier en fonction d'une vitesse de véhicule (v) et/ou d'une position d'accélérateur (a) et/ou d'une pression de freinage (p) et/ou d'un angle de rotation du volant (δ) et/ou d'une inclinaison de véhicule et/ou d'une inclinaison de déclivité et/ou d'une nature de terrain fournie par un conducteur et/ou d'une voie de circulation souhaitée fournie par le conducteur.

6. Procédé selon l'une des revendications précédentes, **caractérisé en ce que** la vitesse de consigne de rotation (n_{F,Ref}) est déterminée en fonction de la somme de la vitesse de consigne de rotation synchrone (n_{F,syn}), de la proportion de vitesse de rotation de différence (n_{F,Forerun}) et de la proportion de vitesse de rotation de glissement (n_{F,slip}), en particulier par la somme de la vitesse de consigne de rotation synchrone (n_{F,syn}), de la proportion de vitesse de rotation de différence (n_{F,Forerun}) et de la proportion de vitesse de rotation de glissement (n_{F,slip}).

7. Procédé selon l'une des revendications précédentes, dans lequel le véhicule (100, 200, 300, 400) est couplé à un outil de travail et forme un attelage avec l'outil de travail, dans lequel le véhicule (100, 200, 300, 400) forme un véhicule tracteur de l'attelage, dans lequel l'outil de travail présente au moins un essieu pouvant être entraîné, et dans lequel l'équipement de guidage (20, 220, 320, 420) du véhicule est conçu pour ajuster une puissance motrice pouvant être transférée sur l'essieu pouvant être entraîné,
**caractérisé en ce que** la puissance motrice transférée sur l'essieu entraîné de l'outil de travail est ajustée de telle sorte qu'un glissement souhaité au niveau des roues de l'essieu entraîné de l'outil de travail s'ajuste par rapport à un support en fonction d'un état de conduite saisi, en particulier un glissement avec lequel une traction si possible optimale de l'attelage peut être obtenue.

8. Procédé selon la revendication 7, **caractérisé en ce que** pour un démarrage en côte dans le sens de déplacement en marche avant en descente, pour provoquer un étirement de l'attelage au démarrage, la puissance motrice transférée sur l'essieu entraîné de l'outil de travail est ajustée de telle sorte que, relativement au glissement des roues (111ₗ, 111ᵣ) du premier essieu (110) par rapport au support et relativement au glissement des roues (121ₗ, 121ᵣ) du second essieu (120) par rapport au support, un glissement négatif à avance des roues de l'essieu entraîné de l'outil de travail s'ajuste par rapport au support.

9. Procédé selon la revendication 7 ou 8, **caractérisé en ce que** pour un démarrage en côte dans le sens de déplacement en marche avant en montée, pour provoquer un refoulement de l'attelage au démarrage, la puissance motrice transférée sur l'essieu entraîné de l'outil de travail est ajustée de telle sorte que, relativement au glissement des roues (111ₗ, 111ᵣ) du premier essieu (110) par rapport au support et relativement au glissement des roues (121ₗ, 121ᵣ) du second essieu (120) par rapport au support, un glissement positif à avance des roues de l'essieu entraîné de l'outil de travail s'ajuste par rapport au support.

10. Procédé selon l'une des revendications précédentes, dans lequel le véhicule (200, 400) présente en outre un troisième moteur d'entraînement (240ᵣ) qui est également prévu pour entraîner au moins une roue (121ᵣ) du second essieu (120), dans lequel le deuxième moteur d'entraînement (240ₗ) est prévu pour entraîner une roue gauche (121ₗ) du second essieu (120) et le troisième moteur d'entraînement (240ᵣ) est prévu pour entraîner une roue droite (121ᵣ) du second essieu (120),
**caractérisé en ce que** l'équipement de guidage (220, 420) est conçu pour, au moins en fonction de la vitesse réelle de rotation (n_{R,act}) déterminée du premier essieu (110), déterminer une vitesse de consigne de rotation (n_{Fl,Ref}) de la roue gauche (121ₗ) du second essieu (120) et une vitesse de consigne de rotation (n_{Fr,Ref}) de la roue droite (121ᵣ) et au moins pour piloter les deuxième (240ₗ) et troisième (240ᵣ) moteurs d'entraînement prévus pour entraîner le second essieu (120) de telle sorte que la vitesse de consigne de rotation (n_{Fl,Ref}, n_{Fr,Ref}) souhaitée s'ajuste respectivement au niveau de la roue gauche (121ₗ) et de la roue droite (121ᵣ) du second essieu (120), avec les étapes de :
- détermination d'une vitesse réelle de rotation (n_{R,act}) du premier essieu (110),
- détermination de la vitesse de consigne de rotation (n_{Fl,Ref}, n_{Fr,Ref}) pour la roue gauche (121ₗ) du second essieu (120) et pour la roue droite (121ᵣ) du second essieu (120) au moins en fonction de la vitesse réelle de rotation (n_{R,act}) du premier essieu (110),
- pilotage du deuxième moteur d'entraînement (240ₗ) et du troisième moteur d'entraînement (240ᵣ) de telle sorte que la vitesse de consigne de rotation (n_{Fl,Ref}, n_{Fr,Ref}) déterminée s'ajuste au niveau la roue gauche (121ₗ) et de la roue droite (121ᵣ) du second essieu (120).

11. Procédé selon la revendication 10, en particulier pour une conduite véhicule du véhicule (200, 400) lors d'une conduite transversale de déclivité, dans lequel le second essieu (120) forme l'essieu avant du véhicule (200, 400), **caractérisé en ce que** la proportion de vitesse de rotation de différence (n_{Fl,Forerun}, n_{Fr,Forerun}) pour déterminer la vitesse de consigne de rotation (n_{Fl,Ref}, n_{Fr,Ref}) de la roue avant (121ₗ ; 121ᵣ) côté vallée est supérieure à la proportion de vitesse de rotation de différence (n_{Fl,Forerun}, n_{Fr,Forerun}) pour déterminer la vitesse de consigne de rotation (n_{Fl,Ref}, n_{Fr,Ref}) de la roue avant (121ₗ ; 121ᵣ) côté montagne, pour contrecarrer une dérive du véhicule (200, 400) occasionnée par la force de déclivité.

12. Procédé selon la revendication 11, en particulier pour une conduite véhicule autonome du véhicule (200, 400) lors d'une conduite en biais de déclivité ou d'une conduite transversale de déclivité, dans lequel le véhicule (200, 400) est conçu pour une conduite véhicule autonome et présente un actionneur de braquage pour un ajustement autonome d'un angle de rayon, **caractérisé en ce que** l'angle de rayon et la proportion de vitesse de rotation de différence (n_{Fl,Forerun} ; n_{Fr,Forerun}) respective des deux roues avant sont ajustés, lors d'une conduite réalisée en autonomie, de préférence lors d'une conduite transversale de déclivité réalisée en autonomie, en fonction d'un chemin de circulation prédéfini par le conducteur et/ou d'une inclinaison de déclivité saisie et/ou de forces de braquage saisies, de telle sorte qu'une résistance à l'avancement du véhicule (200, 400) soit réduite, de préférence minimisée.

13. Véhicule (100, 200, 300, 400) avec au moins deux essieux (110, 120) pouvant être entraînés, en particulier véhicule (100, 200, 300, 400) à deux voies conçu en tant que tracteur ou en tant que machine-outil automotrice et avec au moins deux essieux (110, 120) pouvant être entraînés, dans lequel le véhicule (100, 200, 300, 400) présente
- un premier essieu (110) pouvant être entraîné avec au moins deux roues (111ₗ, 111ᵣ),
- un second essieu (120) pouvant être entraîné avec au moins deux roues (121ₗ, 121ᵣ) ,
- un premier moteur d'entraînement (130, 340, 440l, 440ᵣ),
- au moins un deuxième moteur d'entraînement (140, 240ₗ, 240ᵣ) ,
- un équipement de saisie de grandeurs d'état de conduite (12, 312) pour déterminer un état de conduite du véhicule et
- un équipement de guidage (20, 220, 320, 420),
- dans lequel le premier moteur d'entraînement (130, 340, 440l, 440ᵣ) est prévu pour entraîner au moins une roue (111ₗ, 111ᵣ) du premier essieu (110),
- dans lequel le deuxième moteur d'entraînement (140, 240ₗ, 240ᵣ) est prévu pour entraîner au moins une roue (121ₗ, 121ᵣ) du second essieu (120),
- dans lequel l'équipement pour saisir des grandeurs d'état de conduite (12, 312) est conçu au moins pour saisir une vitesse réelle de rotation (n_{R,act}) du premier essieu (110), et
- dans lequel l'équipement de guidage (20, 220, 320, 420) est conçu pour, au moins en fonction de la vitesse réelle de rotation (n_{R,act}) déterminée du premier essieu (110), déterminer une vitesse de consigne de rotation (n_{F,Ref}) pour la au moins une roue (121ₗ, 121ᵣ) du second essieu (120) et piloter au moins le deuxième moteur d'entraînement (140, 240ₗ, 240ᵣ) de telle sorte que la vitesse de consigne de rotation (n_{F,Ref}) souhaitée s'ajuste au niveau de la au moins une roue (121ₗ, 121ᵣ) du second essieu (120),
dans lequel le véhicule (100, 200, 300, 400) est conçu pour exécuter un procédé selon l'une des revendications 1 à 12.

14. Véhicule (100, 200) à deux voies selon la revendication 13, **caractérisé en ce que** le véhicule (100, 200) est un véhicule hybride, dans lequel le premier moteur d'entraînement (130), qui est prévu pour entraîner le premier essieu (110), est un moteur à combustion (130) et dans lequel le deuxième moteur d'entraînement (140, 240ₗ, 240ᵣ), qui est au moins prévu pour entraîner une roue (121ₗ, 121ᵣ) du second essieu (120), est une machine (140, 240ₗ, 240ᵣ) électrique pouvant être entraînée en tant que moteur électrique, dans lequel le véhicule (100, 200) présente de préférence par ailleurs une machine (150) électrique pouvant être entraînée en tant que générateur et un accumulateur d'énergie (160) électrique, dans lequel la machine (150) électrique pouvant être entraînée en tant que générateur peut être entraînée au moyen du moteur à combustion (130) et est conçue pour fournir de l'énergie électrique à l'accumulateur d'énergie (160) électrique et/ou à la machine (140, 240ₗ, 240ᵣ) électrique pouvant être entraînée en tant que moteur électrique, et dans lequel la machine (140, 240ₗ, 240ᵣ) électrique pouvant être entraînée en tant que moteur électrique peut être entraînée au moyen de l'énergie électrique mise à disposition par le générateur (150) et/ou par l'accumulateur d'énergie (160) électrique.

15. Véhicule (100, 200) à deux voies selon la revendication 13 ou 14, **caractérisé en ce que** le véhicule (100, 200) présente une boîte de vitesse (180) dans une branche de puissance du premier moteur d'entraînement (130) jusqu'au premier essieu (110), dans lequel la machine (150) électrique pouvant être entraînée en tant que générateur est agencée dans cette branche de puissance entre le premier moteur d'entraînement (130) et la boîte de vitesse (180).

16. Véhicule (200, 400) à deux voies selon l'une des revendications 13 à 15, **caractérisé en ce que** le véhicule (200, 400) présente par ailleurs un troisième moteur d'entraînement (240ᵣ), dans lequel le troisième moteur d'entraînement (240ᵣ) est également prévu pour entraîner au moins partiellement le second essieu (120), dans lequel de préférence le deuxième moteur d'entraînement (240ₗ) est prévu pour entraîner une roue gauche (121ₗ) du second essieu (120) et le troisième moteur d'entraînement (240ᵣ) est prévu pour entraîner une roue droite (121ᵣ) du second essieu (120), dans lequel l'équipement de guidage (220, 420) est conçu pour déterminer, au moins en fonction de la vitesse réelle de rotation (n_{R,act}) déterminée du premier essieu (110), une vitesse de consigne de rotation (n_{Fl,Ref}) de la roue gauche (121ₗ) du second essieu (120) et une vitesse de consigne de rotation (n_{Fr,Ref}) de la roue droite (121ᵣ) et piloter au moins les deuxième et troisième moteurs d'entraînement (240ₗ, 240ᵣ) prévus pour entraîner le second essieu (120) de telle sorte que la vitesse de consigne de rotation (n_{Fl,Ref}, n_{Fr},_{Ref}) souhaitée s'ajuste respectivement au niveau de la roue gauche (121ₗ) et de la roue droite (121ᵣ) du second essieu (120).
